(19) Europäisches Patentamt
European Patent Office
Office européen des brevets

(11) **EP 3 451 314 B1**

(12) **FASCICULE DE BREVET EUROPEEN**

(45) Date de publication et mention de la délivrance du brevet:
**10.11.2021 Bulletin 2021/45**

(51) Int Cl.:
*G08G 5/00* *(2006.01)*    *G08G 5/04* *(2006.01)*

(21) Numéro de dépôt: **18190401.2**

(22) Date de dépôt: **23.08.2018**

(54) **PROCEDE ET DISPOSITIF D'EVITEMENT D'UN OBJET PAR DETECTION DE SON RAPPROCHEMENT D'UN AERONEF**

VERFAHREN UND VORRICHTUNG ZUR VERMEIDUNG EINES OBJEKTS DURCH ENTDECKUNG SEINER ANNÄHERUNG AN EIN LUFTFAHRZEUG

METHOD AND DEVICE FOR AVOIDANCE OF AN OBJECT BY DETECTION OF ITS PROXIMITY TO AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2017 FR 1770907**

(43) Date de publication de la demande:
**06.03.2019 Bulletin 2019/10**

(73) Titulaire: **Airbus Helicopters**
**13725 Marignane Cedex (FR)**

(72) Inventeur: **SALESSE-LAVERGNE, Marc**
**13190 ALLAUCH (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A1-2016/029253     WO-A1-2016/053196**
**FR-A1- 2 830 630        US-A1- 2002 133 294**
**US-A1- 2011 288 773    US-A1- 2012 209 457**
**US-B1- 7 706 979**

**Description**

La présente invention se rapporte au domaine technique général des aides au pilotage d'aéronefs et en particulier aux domaines de détection et d'évitement d'objets fixes ou mobiles.

La présente invention concerne plus particulièrement un procédé d'évitement d'un objet par détection de son rapprochement par un aéronef ainsi qu'un dispositif mettant en œuvre ce procédé et qu'un aéronef disposant d'un tel dispositif.

Un objet fixe est formé par exemple par le terrain environnant l'aéronef, un bâtiment, un pylône ou encore un câble. Un objet mobile est quant à lui formé par exemple par un autre aéronef, un drone ou bien un oiseau. Un objet fixe est par la suite désigné par le terme « obstacle » et un objet mobile par le terme « intrus ».

Il existe aujourd'hui pour les aéronefs des systèmes d'aide au pilotage par alerte pour l'évitement de terrain connus sous l'acronyme en langue anglaise « TAWS » pour « Terrain Avoidance Warning System ».

Ces systèmes TAWS permettent d'indiquer, au fur et à mesure de leur rapprochement, les obstacles dangereux et le relief situés en avant de la trajectoire de l'aéronef. Ces systèmes TAWS comportent notamment une fonction d'évitement du relief survolé désignée par l'acronyme en langue anglaise « FLTA » pour « Forward-Looking Terrain Avoidance ». Un tel système permet ainsi de produire automatiquement des alertes en fonction de bases de données du relief et des obstacles éventuels survolés ainsi qu'éventuellement une trajectoire d'évitement lorsque la trajectoire de l'aéronef interfère avec le relief ou bien un obstacle.

Un autre système désigné sous l'acronyme « GPWS » en langue anglaise pour « Ground Proximity Warning Systems », permet d'alerter le pilote de l'aéronef de la proximité du sol.

Des recherches actives visent à améliorer leur efficacité par l'utilisation de nouveaux senseurs tels que des systèmes à base de balayage laser par exemple. Bien qu'efficaces, ces systèmes restent coûteux à ce jour. Dans ce contexte, les systèmes d'imagerie peuvent constituer une alternative et contribuer à faciliter la reconnaissance d'obstacles, voire être intégrés à un ensemble de senseurs s'appuyant sur différentes technologies.

Par ailleurs, les giravions, aussi appelés « aéronefs à voilure tournante », évoluent très souvent à très basse altitude. Le risque de vol à proximité d'obstacles, et notamment de câbles dont une détection visuelle est difficile, est plus important et leur détection constitue un enjeu majeur pour la sécurité des vols. Des systèmes d'alerte pour l'évitement de terrains spécifiques et adaptés aux giravions ont alors été développés et sont connus sous l'acronyme en langue anglaise « HTAWS » pour « Helicopter Terrain Avoidance Warning System ».

De plus, les giravions opérant souvent en zones de vol non contrôlées, le risque de collision avec d'autres aéronefs est également important. Des systèmes de surveillance et d'évitement désigné sous l'acronyme « TCAS » en langue anglaise pour « Traffic and Collision Avoidance System » ainsi que des systèmes d'échange de données entre aéronefs désignés sous l'acronyme « ADSB-In » ont été développés ou sont à l'étude. Le système TCAS au standard II utilise notamment une fonction d'évitement en mode coopératif entre les aéronefs. En revanche, ces systèmes sont chers et complexes à installer sur des giravions du fait des grandes surfaces nécessaires pour leurs antennes.

Par ailleurs, l'utilisation de drones de différentes tailles se démocratise et augmente rapidement. Dès lors, le risque de collision d'un aéronef avec un drone augmente également. Cependant, de part sa taille réduite, la détection et l'identification d'un drone est, au même titre que la détection et l'identification d'un oiseau, difficile et imposent une attention soutenue de l'équipage de l'aéronef. Dans tous les cas, cette détection et cette identification risquent de se produire tardivement et nécessite alors une manœuvre d'évitement devant souvent être vigoureuse.

Par suite, l'automatisation d'une telle manœuvre d'évitement s'avérant une sécurisation nécessaire, des systèmes de détection et d'évitement automatique ont été développés et sont connus sous la désignation en langue anglaise « Sense and Avoid Systems ».

Par exemple, le document WO 2016/189112 décrit une méthode d'évitement d'une collision destinée aux véhicules roulants. Une estimation de la trajectoire d'un objet est faite suite aux détections successives de plusieurs positions de l'objet. Après prédiction d'une trajectoire future de l'objet, une probabilité de collision est estimée et une alarme est déclenchée si cette probabilité est supérieure à un seuil prédéterminé. Une manœuvre automatique d'évitement peut également être réalisée, tel un freinage ou un changement de trajectoire.

On connait également le document EP 2200006 qui décrit un procédé d'estimation de l'état d'un objet et de transmission de cet état à un système de détection et d'évitement de collision. Ce procédé est destiné à un aéronef et exploite des images successives d'un objet pour estimer l'état de l'objet, telles que sa vitesse et sa position, dans des cas supposés de distances minimale et maximale entre l'aéronef et l'objet.

De plus, le document US 8965679 décrit un dispositif et un procédé permettant de maintenir une distance de sécurité entre un aéronef sans pilote et un intrus. En effet, en cas de détection d'une distance entre les trajectoires d'un intrus et de l'aéronef inférieure à un seuil prédéterminé, une solution d'évitement est élaborée en fonction de la trajectoire de l'intrus, l'aéronef réalisant par un exemple une manœuvre vers sa gauche si l'intrus se dirige sur la droite de l'aéronef, en prenant également en compte des contraintes liées au relief environnant.

Le document US 7706979 décrit un dispositif équipant un drone et modifiant le vecteur vitesse ou bien le vecteur accélération du drone lors que la trajectoire du drone est située à une distance d'espacement de la trajectoire d'un autre aéronef inférieure à un seuil minimum. L'évolution de cette distance d'espacement entre les deux trajectoires est définie par un polynôme et la valeur minimale de cette distance d'espacement est obtenue par la résolution d'une équation de degrés trois ou supérieurs. La position et la vitesse de l'autre aéronef peuvent être obtenues par l'intermédiaire d'un radar ou bien d'un récepteur de données *ADSB.*

Le document US 2012/0209457 décrit une méthode et un système de gestion de la distance d'espacement entre les trajectoires de deux aéronefs définissant une manœuvre d'évitement d'un aéronef de sorte à maintenir une distance d'espacement minimale entre les trajectoires. Les trajectoires des aéronefs peuvent être définies par différents moyens, par exemple, une caméra, un radar ou bien un système de mesure laser.

On connait également le document WO 2016/029253 qui décrit un système de prise d'images pour un aéronef, ce système comportant un système de détection de rapprochement de cet aéronef avec un aéronef situé à proximité. Ce système de détection de rapprochement comporte notamment un récepteur de données *ADSB* et utilise les données de positionnement fournies par les aéronefs situés à proximité afin d'estimer la distance entre les deux aéronefs. Ce système de détection de rapprochement détermine notamment l'évolution de la distance d'espacement entre les deux aéronefs en fonction du temps sous la forme d'une fonction polynomiale du temps. Ce système de détection de rapprochement peut enfin signaler que cette distance d'espacement entre les deux aéronefs est trop faible et l'afficher au pilote de l'aéronef.

En outre, les documents WO 2016/053196 et US 2002/0133294 font partie de l'arrière plan technologique de l'invention.

Par ailleurs, la détection d'obstacles et leur évitement automatique font l'objet de nombreuses études notamment dans le domaine de la robotique. Les trajectoires d'évitement sont principalement élaborées en deux dimensions alors que les trajectoires d'évitement réalisées par un aéronef sont plus efficaces si elles sont effectuées en trois dimensions. Toutefois, la recherche de trajectoires d'évitement en trois dimensions conduit à une complexité nettement plus élevée qu'en deux dimensions.

L'efficacité de la trajectoire d'évitement dépend tout d'abord de la minimisation de l'incertitude sur l'état d'un objet se rapprochant de l'aéronef, typiquement sa position, sa vitesse et/ou son accélération. Cette efficacité dépend également des décisions d'adaptation en fonction de l'incertitude sur cet état, afin notamment d'anticiper les mouvements futurs de l'objet lorsqu'il s'agit d'un objet mobile, à savoir un intrus. Enfin, cette efficacité dépend de la trajectoire d'évitement proprement dite qui doit être établie de façon réaliste, optimale et adaptée à l'aéronef ainsi qu'à l'objet afin d'assurer la fiabilité et la réussite de l'évitement.

Un procédé de détection et d'évitement doit donc générer une alerte et/ou la réalisation automatique d'une manœuvre d'évitement à la fois au moment opportun, tout en demeurant fiable et sécuritaire en termes de possibilités d'évitement de l'objet détecté.

Dès lors, la présente invention a pour objet un procédé d'évitement d'un objet par détection de son rapprochement par un aéronef permettant de s'affranchir des limitations mentionnées cidessus, notamment en exploitant la distance entre la trajectoire estimée de l'objet, lorsqu'il est mobile, et la trajectoire estimée de l'aéronef afin d'évaluer le risque de collision et de l'anticiper, si cette marge devient trop faible, en alertant l'équipage de l'aéronef ou bien en réalisant une manœuvre d'évitement.

Dans ce cadre, la présente invention propose un procédé d'évitement d'un objet par détection de son rapprochement d'un aéronef d'un aéronef à voilure tournante selon la revendication 1.

Ce procédé est adapté à la détection d'objets fixes, à savoir le terrain environnant l'aéronef ainsi que tout obstacle tel un bâtiment, un pylône ou bien un câble par exemple, ainsi que d'objets mobiles, à savoir des intrus évoluant dans l'environnement de l'aéronef, tels qu'un autre aéronef, un drone, voire un oiseau par exemple.

L'objet est détecté par un dispositif de détection que comporte l'aéronef. Ce dispositif de détection permet également d'estimer les premiers états successifs de l'objet. Ces premiers états sont constitués par la position, la vitesse et l'accélération de l'objet. Cette position, cette vitesse et cette accélération sont définies relativement à l'aéronef par le dispositif de détection, à savoir dans un repère local de l'aéronef.

Il est possible que l'accélération de l'objet ne puisse pas être estimée par le dispositif de détection. Dans ce cas, cette accélération peut être considérée comme constante et estimée à partir des vitesses de l'objet, voire considérée comme nulle, la vitesse de l'objet étant alors sensiblement constante.

Le dispositif de détection de l'objet est par exemple formé par un système de détection par ondes électromagnétiques, par exemple un système RADAR d'après l'expression en langue anglaise « RAdio Détection And Ranging ». Ce système de détection par ondes électromagnétiques comporte notamment un générateur et un récepteur d'ondes électromagnétiques. Ce système de détection utilise ces ondes électromagnétiques pour détecter la présence d'un objet dans l'environnement de l'aéronef, typiquement par la délivrance de « plots radar », et peut également estimer les premiers états successifs de l'objet.

Le dispositif de détection de l'objet peut également être un système de détection optique, par exemple par télémétrie optique. Ce système de détection optique permet typiquement de scanner l'environnement de l'aéronef par

EP 3 451 314 B1

émission/réception séquentielle d'un faisceau lumineux, par exemple un faisceau *LASER.* De la sorte, un système de détection optique permet de détecter la présence d'un objet dans l'environnement de l'aéronef et d'estimer les premiers états successifs de l'objet. Un système de détection optique est par exemple de type *LIDAR* d'après l'expression en langue anglaise « LIght Détection and Ranging ».

Le dispositif de détection de l'objet peut encore être un système d'imagerie composé d'au moins une caméra permettant la délivrance d'une succession d'images de l'environnement de l'aéronef. Ensuite, un traitement de ces images successives de l'environnement de l'aéronef, selon une des techniques existantes et connues, permet de détecter la présence d'un objet dans l'environnement de l'aéronef et d'estimer la position relative et la vitesse relative de cet objet ainsi que son accélération, et donc les premiers états successifs de l'objet.

Le traitement des images et la première estimation des premiers états successifs de l'objet sont réalisés par au moins un calculateur présent dans l'aéronef. Ce calculateur peut être dédié à ces seules tâches, dédié à la réalisation complète du procédé selon l'invention ou bien partagé avec une ou plusieurs autres fonctions de l'aéronef. Par exemple, ce calculateur est le calculateur de vol de l'aéronef.

En outre, le système d'imagerie peut comporter au moins deux caméras avec des distances focales différentes afin notamment de réaliser un meilleur balayage de l'environnement de l'aéronef. En effet, l'utilisation de deux caméras avec des distances focales différentes permet avantageusement d'une part d'avoir un champ de vision large avec la caméra de courte distance focale, et d'autre part de « zoomer » avec la caméra munie de la distance focale plus longue afin d'avoir un champ de vision restreint, mais avec une meilleure précision, sur une zone particulière de l'environnement de l'aéronef, en particulier où un intrus a été détecté.

Cependant, un système d'imagerie peut rencontrer des problèmes d'observabilité de l'objet, par exemple en fonction de la taille de l'objet, sa forme et/ou sa distance vis-à-vis de l'aéronef. Dans ce cas, des hypothèses peuvent être prises sur la taille de l'objet et son domaine de vitesse. Différentes classes d'objets peuvent ainsi être définies en fonction des tailles et du domaine de vitesse associé.

Plusieurs hypothèses peuvent prises en compte simultanément, la taille de l'objet dans l'image permettant alors d'estimer une distance entre l'objet et l'aéronef en fonction de chaque classe retenue. La cohérence de chaque classe par rapport au domaine de vitesse est alors vérifiée. Pour chacune des classes cohérentes, une distance minimum entre la première trajectoire de l'objet et la seconde trajectoire de l'aéronef est alors estimée et la valeur minimale des distances minimales associées à chaque classe est par exemple utilisée par le procédé selon l'invention.

Le dispositif de détection peut également combiner d'une part un système d'imagerie et d'autre part un système de détection par ondes électromagnétiques ou bien un système de télémétrie optique. De la sorte, le système d'imagerie permet d'estimer notamment les angles entre l'objet et l'aéronef alors que le système de détection par ondes électromagnétiques ou bien le système de télémétrie optique permet avantageusement d'estimer la distance courante entre l'objet et l'aéronef. En conséquence, le dispositif de détection de l'objet limite, voire supprime ces problèmes d'observabilité de l'objet. La détection de l'objet est alors plus précise et plus rapide, améliorant de fait la première estimation des premiers états de l'objet.

De plus, la combinaison de plusieurs dispositifs de détection permet de créer une dissymétrie de moyens favorable à la sécurité du dispositif d'évitement selon l'invention. Par exemple, un système de télémétrie optique pourra détecter un objet situé dans l'ombre, de fait peu visible et possiblement non détecté par le système d'imagerie.

Le dispositif de détection de l'objet peut aussi être un système *ADSB-In* d'échange de données entre aéronefs permettant également de fournir les premiers états successifs d'un objet, lorsque cet objet est un autre aéronef équipé également d'un système *ADSB-In* d'échange de données.

Une analyse des premiers états de l'objet détecté permet de définir si cet objet se rapproche de l'aéronef, déclenchant alors les étapes suivantes du procédé selon l'invention, ou bien s'il est fixe vis-à-vis de l'aéronef ou bien s'en éloigne, l'application de ce procédé se limitant alors à l'étape de détection d'un objet se rapprochant de l'aéronef.

Les seconds états successifs de l'aéronef sont estimés par un dispositif de localisation de l'aéronef. Ces seconds états sont constitués par la position, la vitesse et l'accélération de l'aéronef. Cette position, cette vitesse et cette accélération de l'aéronef sont estimées généralement de façon absolue dans un repère terrestre par le dispositif de localisation.

Le dispositif de localisation est par exemple formé par un récepteur satellitaire de type GNSS pour la désignation en langue anglaise « Global Navigation Satellite System ». Le dispositif de localisation peut également être formé par une centrale inertielle. Une centrale inertielle est un instrument capable d'intégrer les mouvements qu'il subit, en particulier des accélérations et des vitesses angulaires, pour fournir des estimations de son orientation, de sa vitesse linéaire ainsi que de sa position.

Une fois les premiers états successifs de l'objet et les seconds états successifs de l'aéronef connus, une première trajectoire de l'objet et une seconde trajectoire de l'aéronef sont définies respectivement à partir de ces premiers états successifs de l'objet et de ces seconds états successifs de l'aéronef.

La première trajectoire établit ainsi le chemin passé suivi par l'objet et permet de prédire le chemin futur de l'objet. La seconde trajectoire fait la même chose pour l'aéronef. Dans le cas particulier où l'objet est fixe, la première

4

trajectoire se limite à un point dans le repère terrestre.

Pour être comparées, la première trajectoire de l'objet et la seconde trajectoire de l'aéronef doivent être établies dans un repère commun. De préférence, ce repère commun est le repère terrestre dans lequel sont estimés les seconds états de l'aéronef. Pour établir la première trajectoire de l'objet dans ce repère terrestre, il est possible typiquement de transférer les premiers états de l'objet dans ce repère terrestre et d'établir alors la première trajectoire dans ce repère terrestre ou bien d'établir la première trajectoire dans le repère local de l'aéronef puis de la transférer dans ce repère terrestre.

La première trajectoire et la seconde trajectoire sont caractérisées respectivement par un jeu d'équations en fonction du temps définissant ainsi les positions respectives de l'objet et de l'aéronef dans le repère terrestre. Le jeu d'équations caractérisant la première trajectoire de l'objet dans le repère terrestre est déterminé à partir des premiers états successifs de l'objet et des seconds états successifs de l'aéronef, les premiers états successifs caractérisant l'objet relativement à l'aéronef et les seconds états successifs caractérisant l'aéronef de façon absolue. Le jeu d'équations caractérisant la seconde trajectoire de l'aéronef dans le repère terrestre est déterminé uniquement à partir des seconds états successifs caractérisant l'aéronef de façon absolue.

Chaque jeu d'équations comporte trois équations afin de définir les trois coordonnées de l'objet et celles de l'aéronef dans le repère terrestre.

Les évolutions passées et futures de l'objet et de l'aéronef ayant été estimées, il est alors possible de caractériser la distance séparant la première trajectoire de l'objet et la seconde trajectoire de l'aéronef en fonction du temps. Cette distance entre la première trajectoire et la seconde trajectoire peut être estimée par une fonction polynômiale définie à partir de ces deux jeux d'équations.

Les jeux d'équations caractérisant les première et seconde trajectoires ainsi que la fonction polynômiale caractérisant la distance séparant ces première et seconde trajectoires sont définis par au moins un calculateur. Ce calculateur peut être dédié à l'établissement de ces jeux d'équations, partagé notamment pour les estimations des états de l'objet et de l'aéronef ou encore déjà présent dans l'aéronef et partagé avec une ou plusieurs autres fonctions de l'aéronef. Les jeux d'équations et la fonction polynômiale sont ainsi définis à partir des premiers états de l'objet, à savoir sa position, sa vitesse et son accélération, et des seconds états de l'aéronef, à savoir sa position, sa vitesse et son accélération.

De plus, afin de simplifier les jeux d'équations ainsi que la fonction polynômiale et, de fait, de limiter leurs complexités et de faciliter leurs résolutions, des hypothèses peuvent être prises notamment sur l'évolution de l'objet et/ou celle de l'aéronef. Par exemple, en considérant que l'objet et l'aéronef évoluent avec une accélération constante, la première trajectoire et la seconde trajectoire peuvent être caractérisées respectivement par un jeu de trois équations du second ordre. En conséquence, la distance entre la première trajectoire de l'objet et la seconde trajectoire de l'aéronef peut être caractérisée par une fonction polynômiale de degré quatre au maximum définie à partir des deux jeux de trois équations du second ordre.

Ensuite, le risque de collision entre l'objet et l'aéronef est déterminé à partir de la quatrième estimation d'une distance minimale entre la première trajectoire de l'objet et la seconde trajectoire de l'aéronef, et en particulier entre les chemins futurs de l'objet et de l'aéronef.

La quatrième estimation de cette distance minimale est la valeur minimale de la fonction polynômiale. La quatrième estimation de la distance minimale est effectuée uniquement entre les chemins futurs de l'objet et ceux de l'aéronef.

La quatrième estimation de la distance minimale entre la première trajectoire et la seconde trajectoire peut être réalisée par un estimateur calculant la distance minimale par dérivation par rapport au temps de la fonction polynômiale caractérisant la distance entre la première trajectoire et la seconde trajectoire et recherchant la valeur du temps qui minimise cette distance. Cet estimateur est de préférence intégré au calculateur précédemment évoqué et réalisant entre autres les estimations des états et des trajectoires de l'objet et celles de l'aéronef.

Dans l'hypothèse d'une accélération constante de l'objet et de l'aéronef, la fonction polynômiale du temps caractérisant la distance entre les première et seconde trajectoires est une fonction polynômiale de degré quatre. Sa dérivée par rapport au temps est donc une fonction polynômiale de degré trois. La distance minimale est obtenue pour une valeur de temps particulière annulant cette dérivée. Une ou trois valeurs de temps particulières annulent cette dérivée formée par la fonction polynômiale de degré trois.

Lorsqu'une seule valeur de temps particulière annule cette dérivée, la distance minimale est donc définie pour cette valeur de temps particulière appliquée à la fonction polynômiale caractérisant la distance entre les première et seconde trajectoires.

Lorsque trois valeurs de temps particulières annulent cette dérivée, à chaque valeur de temps particulière correspond un extremum local de la fonction polynômiale du temps. Parmi ces extrema locaux, un seul extremum local constitue la distance minimale entre les première et seconde trajectoires.

Le procédé selon l'invention permet d'identifier un premier niveau de risque de collision entre l'objet et l'aéronef.

En effet, lorsque la distance minimale associée à la valeur de temps particulière déterminée est inférieure à un premier seuil, une alarme est déclenchée. De la sorte, le pilote de l'aéronef est alerté qu'un objet se rapproche de l'aéronef et qu'il serait prudent qu'une manœuvre d'évitement soit effectuée rapidement afin que l'aéronef s'éloigne de cet objet, supprimant ainsi le risque de collision. Le pilote peut être situé dans l'aéronef ou bien déporté dans le cas d'un aéronef sans pilote.

Cette alarme est émise par un dispositif d'alerte. Cette alarme peut être visuelle, affichant par exemple un message ou un symbole spécifique sur un écran, et/ou sonore, émettant par exemple un ou plusieurs sons ou bien une annonce vocale audible par le pilote. Dans tous les cas, cette alarme doit être suffisamment explicite pour permettre au pilote d'identifier la situation et de réaliser la manœuvre adaptée.

Selon un mode de réalisation particulier de l'invention, le procédé d'évitement d'un objet par détection de son rapprochement selon l'invention comporte une étape supplémentaire de réalisation automatique d'une manœuvre d'évitement de l'objet par l'aéronef dès que la distance minimale est inférieure à un second seuil, le second seuil étant inférieur au premier seuil.

De fait, dès que la distance minimale associée à la valeur de temps particulière déterminée est inférieure au second seuil, un second niveau de risque de collision entre l'objet et l'aéronef est atteint et une manœuvre d'évitement de l'objet par l'aéronef est réalisée de façon automatique. En effet dans ce cas, la première trajectoire de l'objet tend à se rapprocher dangereusement de la seconde trajectoire de l'aéronef et il est nécessaire d'engager une manœuvre d'évitement au plus vite. Dès lors, afin d'éviter tout risque de collision, l'aéronef effectue de façon automatique la manœuvre d'évitement afin de s'éloigner de l'objet détecté.

Dans un exemple de réalisation adapté à un aéronef à voilure tournante, le premier seuil est égal à 1 mille nautique (1 Nm), qui est égal à 1852 mètres (1852 m) et le second seuil est égal à 0.5 Nm.

Cependant, l'objet détecté pouvant être éloigné de l'aéronef, il n'est pas nécessaire de déclencher une alarme ou bien d'engager une manœuvre d'évitement immédiatement, même si la première trajectoire de l'objet et la seconde trajectoire de l'aéronef tendent à se rapprocher. En effet, d'une part les erreurs d'estimation des premiers états d'un objet éloigné risquent d'être importantes et d'autre part les nécessités du trafic aérien imposent des points de passage communs à tous les aéronefs. Le risque de collision entre l'objet et l'aéronef n'est donc pas avéré, il est alors préférable d'attendre que l'objet se rapproche de l'aéronef afin de confirmer si la première trajectoire de l'objet se rapproche bien de la seconde trajectoire de l'aéronef ou bien si ces deux trajectoires s'éloignent l'une de l'autre.

De fait, le procédé selon l'invention peut comporter une étape d'inhibition du déclenchement de l'alarme ou bien de la réalisation automatique d'une manœuvre d'évitement, tant qu'une distance courante entre l'objet et l'aéronef est supérieure à un seuil de distance, cette distance courante entre l'objet et l'aéronef étant estimée par le dispositif de détection de l'aéronef. Le seuil de distance est par exemple égal à 2 Nm.

Pour réaliser cette manœuvre d'évitement, le procédé selon l'invention communique avec un pilote automatique que comporte l'aéronef et lui fournit par exemple des ordres d'évitement correspondant à cette manœuvre d'évitement.

De plus, selon ce mode de réalisation particulier de l'invention, le procédé selon l'invention peut définir une manœuvre d'évitement afin que l'aéronef s'éloigne rapidement de l'objet en maximisant la distance entre la première trajectoire de l'objet et la seconde trajectoire de l'aéronef associée à la valeur de temps particulière précédemment déterminée. De préférence, cette manœuvre d'évitement est réalisée avec une accélération particulière de l'aéronef permettant de maximiser cette distance entre la première trajectoire et la seconde trajectoire associée à la valeur de temps particulière précédemment déterminée.

Cette accélération particulière est estimée par l'application par exemple d'un jeu d'équations déterminant cette distance entre la première trajectoire de l'objet détecté et la seconde trajectoire de l'aéronef permettant de déterminer l'instant quand cette distance est minimale, à savoir la valeur de temps particulière associée à cette distance minimale, puis par le calcul d'un vecteur accélération de l'aéronef maximisant cette distance minimale. Ensuite, il convient d'utiliser ce vecteur d'accélération pour prédire une nouvelle seconde trajectoire de l'aéronef et de vérifier la distance minimale entre la première trajectoire de l'objet détecté et cette nouvelle seconde trajectoire de l'aéronef est supérieure au premier seuil afin de s'assurer que tout risque de collision est supprimé pendant toute la manœuvre d'évitement.

Dans la majorité des cas, ce calcul est suffisant pour obtenir une nouvelle seconde trajectoire de l'aéronef avec une distance minimale avec la première trajectoire de l'objet détecté supérieure au premier seuil.

Toutefois, il est possible dans des cas particuliers, notamment à proximité de reliefs ou bien lorsque plusieurs intrus sont détectés simultanément tels que des oiseaux en groupe, que cette nouvelle seconde trajectoire de l'aéronef ne permette pas d'obtenir une distance minimale avec la première trajectoire d'un intrus détecté supérieure au premier seuil.

Dès lors, si un risque de collision existe toujours, la distance minimale entre la première trajectoire et la nouvelle seconde trajectoire étant inférieure au premier seuil, au moins une itération de ce calcul du vecteur accélération est nécessaire afin d'obtenir une distance minimale entre la première trajectoire d'un objet détecté et une nouvelle seconde trajectoire de l'aéronef suffisante, à savoir supérieure au premier seuil. Il convient alors, l'aéronef et chaque intrus ayant continué leurs progressions sur leurs trajectoires respectives durant de ce premier calcul, de déterminer une nouvelle distance minimale entre ces trajectoires, de calculer un nouveau vecteur d'accélération qui la maximise et de déterminer une nouvelle seconde trajectoire de l'aéronef utilisant ce nouveau vecteur d'accélération. Ensuite, après vérification que cette nouvelle seconde trajectoire de l'aéronef permet d'obtenir une distance minimale avec la première trajectoire de l'objet détecté supérieure au premier seuil, cette nouvelle seconde trajectoire est utilisée par l'aéronef ou bien une nouvelle itération de ce calcul est de nouveau effectuée le cas échéant.

En particulier, l'accélération particulière maximisant la distance entre la première trajectoire de l'objet et la seconde trajectoire de l'aéronef peut être estimée par dérivation de la distance minimale (dm) par rapport à chacune des composantes du vecteur accélération de l'aéronef afin de déterminer l'accélération particulière de l'aéronef qui maximise cette distance minimale (dm).

Cependant, la manœuvre d'évitement est réalisée de préférence en respectant en priorité le confort de l'équipage et celui des passagers ainsi que les aspects opérationnels de l'aéronef. On entend par exemple par « aspects opérationnels », l'incertitude sur la position de l'aéronef et sur la position des reliefs environnants. Dans ce but, une accélération limite est définie. Dès lors, si l'accélération particulière précédemment définie est supérieure à cette accélération limite, la manœuvre d'évitement est réalisée avec l'accélération limite. Cette accélération limite est par exemple égale à un quart de l'accélération de la pesanteur terrestre.

De plus, cette manœuvre d'évitement peut comporter un changement de cap permettant la réalisation d'un virage coordonné.

De la sorte, le procédé selon l'invention permet d'anticiper le risque d'une collision entre l'aéronef et l'objet et garantit la réalisation automatique d'une manœuvre d'évitement maximisant la distance minimale de passage entre l'aéronef et l'objet détecté au prix d'une mise en œuvre simple et donc aisément réalisable dans un calculateur de vol d'un aéronef.

Afin de définir cette manœuvre d'évitement, on peut définir tout d'abord, dans un repère de navigation *(N,E,D)*,

supposé galiléen, les positions $\begin{pmatrix} N_I(0) \\ E_I(0) \\ D_I(0) \end{pmatrix}$, vitesses $\begin{pmatrix} \dot{N}_I(0) \\ \dot{E}_I(0) \\ \dot{D}_I(0) \end{pmatrix}$ et accélérations $\begin{pmatrix} \ddot{N}_I(0) \\ \ddot{E}_I(0) \\ \ddot{D}_I(0) \end{pmatrix}$ d'un objet détecté, susceptible de constituer un intrus, à un instant initial (0) considéré comme origine du temps. La position de cet objet dans le repère de navigation *(N,E,D)* au temps futur *t* peut être prédit en faisant l'hypothèse que ses accélérations sont constantes, tel que :

$$\begin{cases} N_I(t) = N_I(0) + \dot{N}_I(0)t + \frac{1}{2}\ddot{N}_I(0)t^2 \\ E_I(t) = E_I(0) + \dot{E}_I(0)t + \frac{1}{2}\ddot{E}_I(0)t^2 \\ D_I(t) = D_I(0) + \dot{D}_I(0)t + \frac{1}{2}\ddot{D}_I(0)t^2 \end{cases}$$

De même, connaissant, dans ce même repère de navigation *(N,E,D)*, les positions $\begin{pmatrix} N_A(0) \\ E_A(0) \\ D_A(0) \end{pmatrix}$, vitesses $\begin{pmatrix} \dot{N}_A(0) \\ \dot{E}_A(0) \\ \dot{D}_A(0) \end{pmatrix}$ et accélérations $\begin{pmatrix} \ddot{N}_A(0) \\ \ddot{E}_A(0) \\ \ddot{D}_A(0) \end{pmatrix}$ de l'aéronef à l'instant initial (0), sa position au temps futur *t* peut aussi être prédit en faisant l'hypothèse que ses accélérations sont constantes, tel que :

$$\begin{cases} N_A(t) = N_A(0) + \dot{N}_A(0)t + \frac{1}{2}\ddot{N}_A(0)t^2 \\ E_A(t) = E_A(0) + \dot{E}_A(0)t + \frac{1}{2}\ddot{E}_A(0)t^2 \\ D_A(t) = D_A(0) + \dot{D}_A(0)t + \frac{1}{2}\ddot{D}_A(0)t^2 \end{cases}$$

Le carré de la distance D séparant les trajectoires de l'aéronef et de l'intrus est une fonction du temps t telle que :

$$Dsqr(t) = \left\{[N_I(0) - N_A(0)] + [\dot{N}_I(0) - \dot{N}_A(0)]t + \tfrac{1}{2}[\ddot{N}_I(0) - \ddot{N}_A(0)]t^2\right\}^2 +$$

$$\left\{[E_I(0) - E_A(0)] + [\dot{E}_I(0) - \dot{E}_A(0)]t + \tfrac{1}{2}[\ddot{E}_I(0) - \ddot{E}_A(0)]t^2\right\}^2 + \left\{[D_I(0) - D_A(0)] +\right.$$

$$\left.[\dot{D}_I(0) - \dot{D}_A(0)]t + \tfrac{1}{2}[\ddot{D}_I(0) - \ddot{D}_A(0)]t^2\right\}^2.$$

Le carré de la distance D peut également être écrit :

$$Dsqr(t) = \{a_X + b_X t + c_X t^2\}^2 + \{a_Y + b_Y t + c_Y t^2\}^2 + \{a_Z + b_Z t + c_Z t^2\}^2$$

avec

$$\begin{cases} a_X = N_I(0) - N_A(0) \\ b_X = \dot{N}_I(0) - \dot{N}_A(0) \\ c_X = \tfrac{1}{2}[\ddot{N}_I(0) - \ddot{N}_A(0)] \end{cases}, \quad \begin{cases} a_Y = E_I(0) - E_A(0) \\ b_Y = \dot{E}_I(0) - \dot{E}_A(0) \\ c_Y = \tfrac{1}{2}[\ddot{E}_I(0) - \ddot{E}_A(0)] \end{cases} \text{ et } \begin{cases} a_Z = D_I(0) - D_A(0) \\ b_Z = \dot{D}_I(0) - \dot{D}_A(0) \\ c_Z = \tfrac{1}{2}[\ddot{D}_I(0) - \ddot{D}_A(0)] \end{cases}.$$

Si l'un des coefficients $c_X$, $c_Y$ ou $c_Z$ est non nul, alors cette fonction *Dsqr(t)* est un polynôme de degré quatre du temps t dont le terme en $t^4$ vaut $\left(c_X^2 + c_Y^2 + c_Z^2\right)$. Cette fonction *Dsqr(t)* tend alors à croître indéfiniment avec le temps t.

Si tous les coefficients $c_X$, $c_Y$ et $c_Z$ sont nuls et si l'un des coefficients $b_X$, $b_Y$ ou $b_Z$ est non nul, cette fonction *Dsqr(t)* est un polynôme de degré deux du temps*t* dont le terme en $t^2$ vaut $\left(b_X^2 + b_Y^2 + b_Z^2\right)$. Cette fonction *Dsqr(t)* tend aussi à croître indéfiniment avec le temps t.

Enfin, si tous les coefficients $b_X$, $b_Y$, $b_Z$, $c_X$, $c_Y$ et $c_Z$ sont nuls, alors la fonction *Dsqr(t)* est constante et l'objet ne menace pas l'aéronef.

Dans le cas où la fonction *Dsqr(t)* est un polynôme de degré quatre du temps, sa dérivée $\frac{\partial Dsqr(t)}{\partial t}$ par rapport au temps *t est* un polynôme de degré trois. Un tel polynôme de degré trois admet trois racines complexes, celles contenant un terme imaginaire non nul étant nécessairement conjuguées, puisque les coefficients de ce polynôme sont réels. Un tel polynôme de degré trois admet donc soit une racine réelle et deux racines complexes conjuguées, soit trois racines réelles. On entend par « racine » d'un polynôme une valeur ou solution permettant d'annuler ce polynôme.

Dans le cas où la fonction *Dsqr(t)* est un polynôme de degré deux du temps, sa dérivée $\frac{\partial Dsqr(t)}{\partial t}$ par rapport au temps t est un polynôme de degré un admettant une racine réelle.

Dans ces deux cas, la fonction *Dsqr(t)* prend des valeurs infinies positives quand le temps t tend vers l'infini de façon positive ou négative ($\pm\infty$). Dès lors, si sa dérivée $\frac{\partial Dsqr(t)}{\partial t}$ par rapport au temps t n'admet qu'une seule racine, Cette racine correspond à un minimum de la fonction *Dsqr(t)*.

Si la dérivée $\frac{\partial Dsqr(t)}{\partial t}$ admet trois racines réelles, trois cas peuvent se présenter.

Tout d'abord, si ces trois racines sont distinctes, la dérivée $\frac{\partial Dsqr(t)}{\partial t}$ est de signe négatif lorsque le temps *t* tend vers l'infini de façon négative (-$\infty$). Lorsque le temps t augmente, cette dérivée $\frac{\partial Dsqr(t)}{\partial t}$ s'annule à chaque racine, puis change de signe à chacune de ces racines pour finir avec un signe positif après la troisième racine. De fait, la première et la troisième racines constituent nécessairement des minima de la fonction *Dsqr(t)*.

Ensuite, si deux racines sont doubles, à savoir confondues, et distinctes de la racine simple, la dérivée

$\frac{\partial Dsqr(t)}{\partial t}$ s'annule au niveau de la racine double sans changer pas de signe. Elle ne change donc de signe qu'au niveau de la racine simple qui est le seul minimum de la fonction *Dsqr(t).*

**[0085]** Enfin, si ces trois racines sont triples et confondues, la dérivée $\frac{\partial Dsqr(t)}{\partial t}$ s'annule et change de signe pour cette racine triple, qui constitue alors un minimum de la fonction *Dsqr(t).*

**[0086]** Que ce soit par une résolution directe d'une équation du troisième ordre, par exemple par la méthode de Cardan, ou bien par une approximation numérique, par exemple par la méthode de Jenkins et Traub, il est donc toujours possible de déterminer une ou deux distances minimales de passage en fonction du temps t. Comme il convient de ne retenir que les distances minimales à venir, c'est-à-dire correspondant à un temps t positif, il ressort de cette courte analyse que trois cas de figure se présentent.

**[0087]** Selon un premier cas, chaque racine annulant la dérivée $\frac{\partial Dsqr(t)}{\partial t}$ est négative, le carré de la distance *Dsqr(t)* ne fait donc que croître après l'instant initial, aucune correction de trajectoire de l'aéronef n'est nécessaire.

**[0088]** Selon un deuxième cas, une racine notée $t_{min}$ annulant la dérivée $\frac{\partial Dsqr(t)}{\partial t}$ est positive. Le carré de la distance *Dsqr(t)* passe donc par un minimum au temps $t_{min}$. Une correction de trajectoire peut alors être nécessaire, si la distance minimale au temps $t_{min}$ est inférieure au second seuil.

**[0089]** Selon un troisième cas, deux racines notées $t_{min1}$ et $t_{min2}$ annulant la dérivée $\frac{\partial Dsqr(t)}{\partial t}$ sont positives. Le carré de la distance *Dsqr(t)* passe alors par deux minima, aux temps $t_{min1}$ et $t_{min2}$. Une correction de trajectoire peut également être nécessaire si au moins une de ces deux distances minimales aux temps $t_{min1}$ et $t_{min2}$ est inférieure au second seuil.

**[0090]** Au temps noté de manière générique $t_{min}$ correspondant à un minimum du carré de la distance *Dsqr(t),* donc à une distance minimale entre la première trajectoire de l'objet et la seconde trajectoire de l'aéronef, le carré de cette distance minimale s'écrit :

$$Dsqr(t_{min}) = \{a_X + b_X t_{min} + c_X t_{min}^2\}^2 + \{a_Y + b_Y t_{min} + c_Y t_{min}^2\}^2 + \{a_Z + b_Z t_{min} + c_Z t_{min}^2\}^2.$$

**[0091]** Il est possible d'agir sur les coefficients $c_X$, $c_Y$ et $c_Z$ à travers les commandes en accélération $[\ddot{N}_A(0),\ddot{E}_A(0),\ddot{D}_A(0)]$ de l'aéronef puisque

$$\begin{cases} c_X = \frac{1}{2}\left[\ddot{N}_I(0) - \ddot{N}_A(0)\right] \\ c_Y = \frac{1}{2}\left[\ddot{E}_I(0) - \ddot{E}_A(0)\right] \\ c_Z = \frac{1}{2}\left[\ddot{D}_I(0) - \ddot{D}_A(0)\right] \end{cases}.$$

**[0092]** Il est donc possible d'évaluer l'influence sur le carré de cette distance minimale $Dsqr(t_{min})$ d'une variation d'accélération autour de sa valeur initiale $[\ddot{N}_A(0) + \delta\ddot{N}_A, \ddot{E}_A(0) + \delta\ddot{E}_A, \ddot{D}_A(0) + \delta\ddot{D}_A]$ mise en œuvre en un temps suffisamment court à l'échelle de la manœuvre complète. En effet, les dérivées partielles du carré de cette distance minimale $Dsqr(t_{min})$ par rapport à chacun des termes de cette accélération de l'aéronef indiquent dans quelles directions il convient de corriger la trajectoire de l'aéronef pour augmenter cette distance minimale. Le carré de la distance minimale $Dsqr_{tmin}(\ddot{N}_A,\ddot{E}_A,\ddot{D}_A)$, fonction de l'accélération de l'aéronef, s'approxime en effet de la manière suivante, au premier ordre :

$$Dsqr_{t_{min}}\left(\ddot{N}_A, \ddot{E}_A, \ddot{D}_A\right) \approx$$

$$Dsqr_{t_{min}}\left(\ddot{N}_A(0), \ddot{E}_A(0), \ddot{D}_A(0)\right) + \frac{\partial Dsqr_{t_{min}}\left(\ddot{N}_A(0), \ddot{E}_A(0), \ddot{D}_A(0)\right)}{\partial \ddot{N}_A} \delta\ddot{N}_A +$$

$$\frac{\partial Dsqr_{t_{min}}\left(\ddot{N}_A(0), \ddot{E}_A(0), \ddot{D}_A(0)\right)}{\partial \ddot{E}_A} \delta\ddot{E}_A + \frac{\partial Dsqr_{t_{min}}\left(\ddot{N}_A(0), \ddot{E}_A(0), \ddot{D}_A(0)\right)}{\partial \ddot{D}_A} \delta\ddot{D}_A.$$

Ces directions sont donc rassemblées par le vecteur normalisé :

$$\vec{u}_{A_{Nav}} = \frac{1}{\sqrt{\left[\frac{\partial Dsqr_{t_{min}}(...)}{\partial \ddot{N}_A}\right]^2 + \left[\frac{\partial Dsqr_{t_{min}}(...)}{\partial \ddot{E}_A}\right]^2 + \left[\frac{\partial Dsqr_{t_{min}}(...)}{\partial \ddot{D}_A}\right]^2}} \begin{pmatrix} \frac{\partial Dsqr_{t_{min}}(...)}{\partial \ddot{N}_A} \\ \frac{\partial Dsqr_{t_{min}}(...)}{\partial \ddot{E}_A} \\ \frac{\partial Dsqr_{t_{min}}(...)}{\partial \ddot{D}_A} \end{pmatrix} = \begin{pmatrix} \delta n_A \\ \delta e_A \\ \delta d_A \end{pmatrix}$$

Toute manœuvre créant une correction d'accélération $\begin{pmatrix} \delta n \\ \delta e \\ \delta d \end{pmatrix}$ telle que $\delta n_A.\delta n + \delta e_A.\delta e + \delta d_A.\delta d > 0$ augmente

donc la distance minimale et contribue à l'évitement, l'alignement de ce vecteur $\begin{pmatrix} \delta n \\ \delta e \\ \delta d \end{pmatrix}$ sur $\begin{pmatrix} \delta n_A \\ \delta e_A \\ \delta d_A \end{pmatrix}$, soit

$\begin{pmatrix} \delta n \\ \delta e \\ \delta d \end{pmatrix} = \gamma \begin{pmatrix} \delta n_A \\ \delta e_A \\ \delta d_A \end{pmatrix}$ avec $\gamma > 0$, permettant de maximiser cet évitement, c'est-à-dire d'obtenir la plus grande augmentation de distance minimale possible, pour un module de correction d'accélération donné. Rechercher l'évitement revient ainsi à rectifier le vecteur "accélération", dans l'espace, à savoir en trois dimensions, dans le sens d'un pointage dans la même direction que ce vecteur unitaire $\vec{u}_{A_{Nav}}$.

Par ailleurs, un aéronef a des possibilités d'accélération limitées en amplitude, en durée et en orientation. De plus, ces contraintes sont renforcées lorsque des occupants se trouvent à bord, afin de préserver leur confort ou bien afin de présenter au pilote de cet aéronef les éléments nécessaires à la compréhension de la manœuvre d'évitement à réaliser.

Généralement, une telle manœuvre d'évitement est à réaliser lors d'un vol de croisière de l'aéronef, qui a alors une accélération sensiblement nulle. En prenant donc cette hypothèse d'une accélération de l'aéronef nulle, le vecteur

$\vec{u}_{A_{Nav}} = \begin{pmatrix} n_A \\ e_A \\ d_A \end{pmatrix}$ peut être scindé en un objectif d'une accélération horizontale et un objectif d'une accélération verticale.

Comme le vecteur $\vec{u}_{A_{Nav}}$ est unitaire, il peut être réécrit en faisant apparaître d'une part, un angle $\beta$ entre l'axe N du repère de navigation et la projection sur le plan (N,E), choisi pour être généralement horizontal, de ce vecteur $\vec{u}_{A_{Nav}}$ compté positif dans le sens horaire selon une vue du dessus, et d'autre part, un angle $\alpha$ entre le plan (N,E) et ce vecteur $\vec{u}_{A_{Nav}}$, compté positif vers le haut.

L'angle $\beta$ s'obtient en calculant l'arc-tangente à deux arguments des composantes $e_A$ et $n_A$ du vecteur $\vec{u}_{A_{Nav}}$, tel que $\beta = atan2(e_A, n_A)$, sous réserve que ces deux composantes ne soient pas simultanément nulles. Si ces deux composantes sont nulles, alors l'angle $\beta$ est indifférent et l'accélération de l'aéronef doit être par exemple purement alignée sur l'axe D du repère de navigation.

L'angle $\alpha$ s'obtient en calculant l'opposé de l'arc-sinus de la composante $d_A$ du vecteur $\vec{u}_{A_{Nav}}$, cette composante $d_A$ étant définie positive vers le bas, de sorte que $\alpha = -arcsin(d_A)$. L'angle $\alpha$, exprimé en radian, est alors compris entre

$$-\frac{\pi}{2} \text{ et } +\frac{\pi}{2}.$$

$$\vec{u}_{A_{Nav}} = \begin{pmatrix} n_A \\ e_A \\ d_A \end{pmatrix} = \begin{pmatrix} \cos\beta\cos\alpha \\ \sin\beta\cos\alpha \\ -\sin\alpha \end{pmatrix}.$$

Le vecteur unitaire s'écrit ainsi :

L'objectif d'accélération $\gamma\begin{pmatrix} \cos\beta\cos\alpha \\ \sin\beta\cos\alpha \\ -\sin\alpha \end{pmatrix}$ ainsi exprimé dans le repère de navigation peut être transféré dans un premier temps dans un premier repère (X,Y,D) attaché à l'aéronef en appliquant une rotation d'angle $-\psi$ représentant l'opposé du cap de l'aéronef. Le premier repère (X,Y,D) attaché à l'aéronef est défini par un axe X situé dans un plan horizontal, à savoir parallèle au plan (N,E), aligné sur le cap de l'aéronef et pointant vers l'avant de l'aéronef, un axe Y situé dans ce même plan horizontal et pointant vers la droite de l'aéronef, et la direction D du repère de navigation. L'axe X du premier repère (X,Y,D) attaché à l'aéronef forme avec la direction N du repère de navigation le cap de $\psi$ l'aéronef.

Le vecteur objectif d'accélération s'écrit alors dans le premier repère (X,Y,D) attaché à l'aéronef :

$$\begin{pmatrix} a_X \\ a_Y \\ a_D \end{pmatrix} = \gamma \begin{pmatrix} \cos\psi & \sin\psi & 0 \\ -\sin\psi & \cos\psi & 0 \\ 0 & 0 & 1 \end{pmatrix} \begin{pmatrix} \cos\beta\cos\alpha \\ \sin\beta\cos\alpha \\ -\sin\alpha \end{pmatrix} = \gamma \begin{pmatrix} \cos(\beta-\psi)\cos\alpha \\ \sin(\beta-\psi)\cos\alpha \\ -\sin\alpha \end{pmatrix}.$$

Cette première rotation met en évidence que la stratégie d'évitement sera nécessairement bien différente selon la valeur de l'écart angulaire $(\beta - \psi)$.

Le vecteur objectif d'accélération est ensuite transféré dans un second repère direct (x,Y,W) attaché à l'aéronef par une rotation d'angle $-\theta$ représentant l'angle d'assiette autour de l'axe de tangage de l'aéronef, à savoir sa direction transversale. Ce second repère direct (x,Y,W) est défini par un axe x aligné sur la direction longitudinale de l'aéronef et pointant vers l'avant de l'aéronef, l'axe Y et un axe W qui est une direction intermédiaire de calcul définie de sorte que le trièdre (x,Y,W) forme un repère direct.

Le vecteur objectif d'accélération s'écrit alors dans le second repère (x,Y,W) attaché à l'aéronef :

$$\begin{pmatrix} a_x \\ a_Y \\ a_W \end{pmatrix} = \gamma \begin{pmatrix} \cos\theta & 0 & -\sin\theta \\ 0 & 1 & 0 \\ \sin\theta & 0 & \cos\theta \end{pmatrix} \begin{pmatrix} \cos(\beta-\psi)\cos\alpha \\ \sin(\beta-\psi)\cos\alpha \\ -\sin\alpha \end{pmatrix} = \gamma \begin{pmatrix} \cos(\beta-\psi)\cos\alpha\cos\theta + \sin\alpha\sin\theta \\ \sin(\beta-\psi)\cos\alpha \\ \cos(\beta-\psi)\cos\alpha\sin\theta - \sin\alpha\cos\theta \end{pmatrix}.$$

De la sorte, pour des valeurs de l'écart angulaire $(\beta - \psi)$ telles que $\cos(\beta - \psi)$ tend vers 1, le vecteur objectif d'accélération tend vers $\gamma\begin{pmatrix} \cos(\theta-\alpha) \\ 0 \\ \sin(\theta-\alpha) \end{pmatrix}$, pour les valeurs de l'écart angulaire $(\beta - \psi)$ telles que $\cos(\beta - \psi)$ tend vers (-1), le vecteur objectif d'accélération tend vers $\gamma\begin{pmatrix} \cos(\theta+\alpha) \\ 0 \\ -\sin(\theta+\alpha) \end{pmatrix}$, et pour des valeurs de l'écart angulaire $(\beta - \psi)$ telles que $\cos(\beta - \psi)$ tend vers 0, le vecteur objectif d'accélération tend vers $\gamma\begin{pmatrix} \sin\alpha\sin\theta \\ \pm\cos\alpha \\ -\sin\alpha\cos\theta \end{pmatrix}.$

En outre, le vecteur accélération de l'aéronef peut être exprimé dans un repère local (x,y,z) attaché à l'aéronef, l'axe x étant la direction longitudinale de l'aéronef et dirigé vers l'avant, l'axe y étant la direction transversale de l'aéronef et dirigé vers la droite et l'axe z étant la direction verticale de l'aéronef et dirigé vers le bas. Le vecteur accélération de

$$\begin{pmatrix} a_x \\ a_y \\ a_z \end{pmatrix} = G \begin{pmatrix} j_x - \sin\theta \\ j_y + \cos\theta\sin\varphi \\ j_z + \cos\theta\cos\varphi \end{pmatrix}$$

l'aéronef peut être écrit dans ce repère local (x,y,z) :                     , où $G$ est l'accélération de la pesanteur terrestre et $\begin{pmatrix} j_x \\ j_y \\ j_z \end{pmatrix}$ sont les facteurs de charge mesurés par les accéléromètres de l'aéronef. Un transfert entre le repère local (x,y,z) et le second repère (x,Y,W) est effectué par une rotation d'angle $\varphi$ correspondant à un angle l'angle d'assiette autour de l'axe de roulis de l'aéronef, à savoir sa direction longitudinale de sorte que le vecteur accélération de l'aéronef s'écrit dans le second repère (x,Y,W) :

$$G \begin{pmatrix} 1 & 0 & 0 \\ 0 & \cos\varphi & -\sin\varphi \\ 0 & \sin\varphi & \cos\varphi \end{pmatrix} \begin{pmatrix} j_x - \sin\theta \\ j_y + \cos\theta\sin\varphi \\ j_z + \cos\theta\cos\varphi \end{pmatrix} = G \begin{pmatrix} j_x - \sin\theta \\ j_y\cos\varphi - j_z\sin\varphi \\ j_y\sin\varphi + j_z\cos\varphi + \cos\theta \end{pmatrix}.$$

Pour des raisons de confort des occupants, il est en général choisi de maintenir le facteur de charge latérale $j_y$ le plus proche possible de 0 en vol d'avancement. Dans cette hypothèse, l'accélération de l'aéronef dans le second repère (x,Y,W) se réduit à $G \begin{pmatrix} j_x - \sin\theta \\ -j_z\sin\varphi \\ j_z\cos\varphi + \cos\theta \end{pmatrix}$.

De plus, lors d'un virage de l'aéronef et pour le confort des occupants, il est aussi choisi de maintenir $\tan\varphi = \frac{U}{G}\dot\psi$ , avec U est la vitesse longitudinale de l'aéronef, c'est-à-dire que toute inclinaison de l'aéronef doit s'accompagner d'une rotation sensiblement proportionnelle du cap de l'aéronef.

En outre et contrairement à un avion ou bien un aéronef muni d'une ou plusieurs hélices d'avancement pouvant agir significativement sur le facteur de charge longitudinale $j_x$ par la poussée des moteurs ou des hélices d'avancement, un aéronef à voilure tournante traditionnel évolue avec un facteur de charge longitudinale $j_x$ faible dans le domaine des manœuvres ordinaires. L'essentiel de l'accélération longitudinale de l'aéronef normalisée en fonction de l'accélération de la pesanteur terrestre G, notée $\delta_{long}$ et comptée positive vers l'avant, provient donc du basculement du poids de l'aéronef tel que $G(j_x - \sin\theta) \approx G.\delta_{long}$, la poussée longitudinale pure obtenue par le basculement du disque rotor de l'aéronef contribuant très peu à cette valeur.

Ensuite, le facteur de charge verticale $j_z$ doit être commandé pour compenser sensiblement l'essentiel du poids de l'aéronef et permettre de créer un minimum d'accélération verticale normalisée en fonction de l'accélération de la pesanteur terrestre G, noté $\delta_{vert}$ et compté positif vers le haut, y compris lors des inclinaisons en virage, tel que

$j_z = -\frac{\cos\theta + \delta_{vert}}{\cos\varphi}$ . Un terme $\cos\theta$ très proche de 1 dans la plupart des cas de vol pourrait toutefois être pris en compte dans ce calcul du facteur de charge verticale $j_z$.

Il convient alors de trouver comment satisfaire un objectif défini par le vecteur d'accélération

$\gamma \begin{pmatrix} \cos(\beta - \psi)\cos\alpha\cos\theta + \sin\alpha\sin\theta \\ \sin(\beta - \psi)\cos\alpha \\ \cos(\beta - \psi)\cos\alpha\sin\theta - \sin\alpha\cos\theta \end{pmatrix}$ en ne pouvant agir que sur les termes du vecteur

$G \begin{pmatrix} j_x - \sin\theta \\ -j_z\sin\varphi \\ j_z\cos\varphi + \cos\theta \end{pmatrix}$, à savoir les assiettes ($\varphi$ et $\theta$) et le facteur de charge $j_z$, typiquement par prise d'incidence ou action sur le pas collectif, et la variation $\dot\psi$ du cap induite par les prises de roulis. Une stratégie de commande possible pour la réalisation de la manœuvre d'évitement peut alors être la suivante :

- agir en roulis afin d'obtenir : $\varphi = \tan^{-1}\left[\frac{\gamma}{G}\sin(\beta - \psi)\cos\alpha\right]$ ,

- coordonner cette action en roulis avec une variation $\dot{\psi}$ du cap pour assurer $\dfrac{G}{U}\tan\varphi = \dot{\psi}$ , et

- coordonner cette action en roulis avec une action sur le pas collectif pour assurer $j_z = -\dfrac{\cos\theta + \delta_{vert}}{\cos\varphi} \approx -\dfrac{1}{\cos\varphi}$

On obtient de la sorte :

$$-G.j_z \sin\varphi = G\tan\varphi = G\frac{\gamma}{G}\sin(\beta - \psi)\cos\alpha = \gamma.\sin(\beta - \psi)\cos\alpha.$$

On peut également signaler que la loi roulis $\varphi = \tan^{-1}\left[\dfrac{\gamma}{G}\sin(\beta - \psi)\cos\alpha\right]$ doit tout-de-même respecter des contraintes d'angle de roulis maximum, par exemple +/-30°, voire +/-45° ou bien des valeurs maximales qui sont fonction de la vitesse longitudinale $U$ par exemple +/-0.584 fois la vitesse $U$ exprimée en m/s inférieures à +/- 30° voire +/-45°.

On peut aussi signaler que la coordination du virage conduit à l'équation $\dfrac{\gamma}{U}\sin(\beta - \psi)\cos\alpha = \dot{\psi}$ qui converge vers l'alignement du cap $\psi$ sur la direction horizontale définie par l'angle $\beta$. Cette phase de commande du roulis ne peut donc être que transitoire.

Cette stratégie "latérale" doit donc être complétée par une stratégie visant à répondre aux deux autres objectifs d'accélération :

$$\begin{cases} \gamma[\cos(\beta - \psi)\cos\alpha\cos\theta + \sin\alpha\sin\theta] = G(j_x - \sin\theta) = G.\delta_{long} \\ \gamma[\cos(\beta - \psi)\cos\alpha\sin\theta - \sin\alpha\cos\theta] = G(j_z\cos\varphi + \cos\theta) = -G.\delta_{vert} \end{cases}$$

Le document FR 2 830 630, décrit comment mettre en œuvre sur un aéronef à voilure tournante traditionnel un tel objectif vertical (ici donné par $-\gamma[\cos(\beta - \psi)\cos\alpha\sin\theta - \sin\alpha\cos\theta]$) et un tel objectif longitudinal (ici donné par $\gamma[\cos(\beta - \psi)\cos\alpha\cos\theta + \sin\alpha\sin\theta]$), tout en respectant des contraintes de puissance maximale et de vitesse air minimale.

En outre, la même distribution de commande pourrait s'appliquer ici et ainsi compléter la stratégie de pilotage de l'évitement. Mais, cette stratégie d'évitement de l'objet privilégie, à haute vitesse, un objectif vertical qui pourra donc être atteint au détriment d'un objectif longitudinal.

En outre, le procédé selon l'invention peut comporter une étape complémentaire d'affichage de l'objet sur un dispositif d'affichage. De la sorte, le pilote de l'aéronef peut visualiser la position de l'objet vis-à-vis de l'aéronef et sa progression sur le dispositif d'affichage, facilitant ainsi son repérage direct par l'équipage de l'aéronef à l'extérieur de l'aéronef. Le dispositif d'affichage peut être un écran présent dans l'aéronef, un dispositif d'Interface Homme Machine dit IHM, un dispositif de vision tête haute ou bien un système de visualisation intégré à un casque du pilote de l'aéronef.

L'invention a également pour objet un dispositif d'évitement d'un objet par détection de son rapprochement destiné à équiper un aéronef à voilure tournante selon la revendication 11.

Ce dispositif d'évitement d'un objet par détection de son rapprochement permet alors la mise en œuvre du procédé précédemment décrit.

Ce dispositif d'évitement est également relié au pilote automatique de l'aéronef afin de commander la réalisation de la manœuvre d'évitement lorsque les conditions l'exigent.

Un autre objet de l'invention est un aéronef à voilure tournante comportant un dispositif d'évitement d'un objet par détection de son rapprochement précédemment décrit.

L'invention et ses avantages apparaîtront avec plus de détails dans le cadre de la description qui suit avec des exemples de réalisation donnés à titre illustratif en référence aux figures annexées qui représentent :

- la figure 1, un aéronef à voilure tournante muni d'un dispositif d'évitement d'un objet par détection de son rapprochement,

- la figure 2, un schéma synoptique d'un procédé d'évitement d'un objet par détection de son rapprochement,

- la figure 3 une vue d'un aéronef, d'objets dans son environnement et de leurs trajectoires.

Les éléments présents dans plusieurs figures distinctes sont affectés d'une seule et même référence.

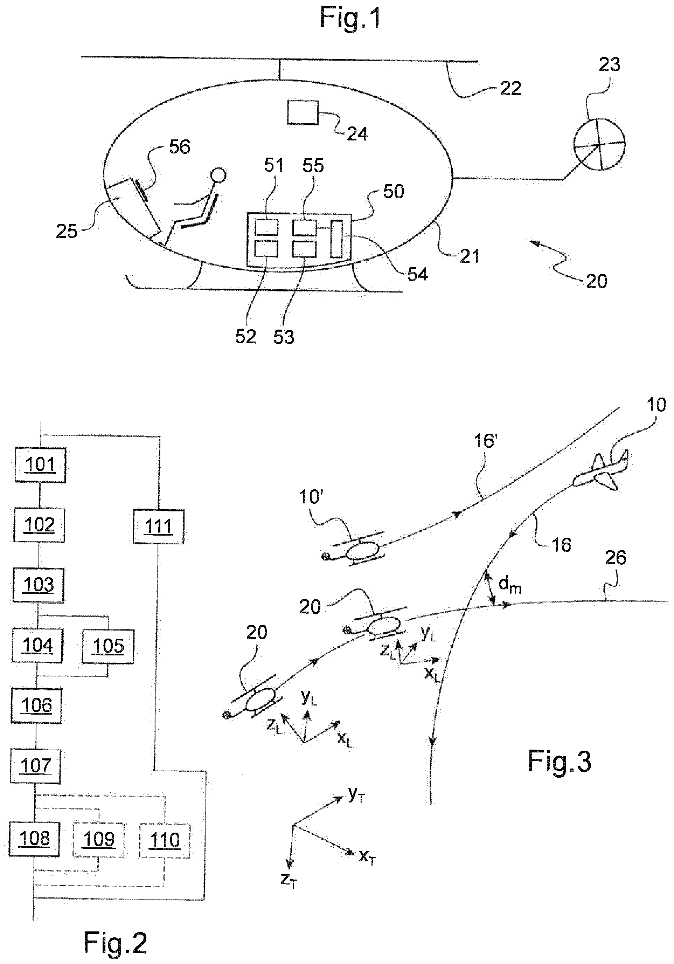

La figure 1 représente un aéronef 20 à voilure tournante comportant notamment un fuselage 21, un rotor principal 22 assurant sa sustentation, voire sa propulsion, et un rotor arrière 23. Cet aéronef 20 comporte également un pilote automatique 24, un dispositif 50 d'évitement d'un objet 10 par détection de son rapprochement et un tableau de bord 25 muni d'un écran 56.

Le dispositif 50 comporte un dispositif de détection 51 d'un objet 10 situé dans l'environnement de l'aéronef 20 et fournissant un premier état de cet objet 10, un dispositif de localisation 52 de l'aéronef 20 fournissant un second état de l'aéronef 20, au moins une mémoire 53 stockant des instructions de calcul, des premiers états successifs de l'objet 10 et des seconds états successifs de l'aéronef 20, au moins un calculateur 54 apte à exécuter ces instructions de calcul et au moins un dispositif d'alerte.

En effet, les aéronefs, et en particulier les aéronefs à voilure tournante, peuvent évoluer dans des zones de vol non contrôlées dans lesquelles le risque de collision avec un objet 10 volant dans ces zones est important. Un tel objet 10 mobile peut être par exemple un autre aéronef, un drone, voire un oiseau, considéré comme un intrus dans l'environnement de l'aéronef 20.

Le risque de collision avec un objet 10 fixe, formé par le terrain environnant l'aéronef 20 ou bien un obstacle sur ce terrain, existe également lorsque l'aéronef 20 vole à très basse altitude.

Ce dispositif 50 vise à limiter, voire supprimer, ce risque de collision par la mise en œuvre d'un procédé d'évitement d'un objet 10 par détection de son rapprochement dont un schéma synoptique avec ses différentes étapes est représenté sur la figure 2.

La figure 3 représente l'aéronef 20 et son environnement dans lequel évoluent deux objets 10,10'. Deux repères sont également représentés sur la figure 3. Un repère local $(X_L, Y_L, Z_L)$, attaché à l'aéronef 20 est formé par trois directions $X_L$, $Y_L$ et $Z_L$ orthogonales les unes par rapport aux autres et fixes vis-à-vis de l'aéronef 20. Un repère terrestre $(X_T, Y_T, Z_T)$ est quant à lui formé par exemple par la direction du Nord, la direction de l'Est et une direction verticale orientée vers le bas et correspondant à la direction de la gravité terrestre.

Le procédé d'évitement d'un objet 10 par détection de son rapprochement d'un aéronef 20 comporte tout d'abord une détection 101 d'un objet 10 se rapprochant de l'aéronef 20. Cette détection d'un objet 10 se rapprochant de l'aéronef 20 est effectuée par un dispositif de détection 51. Ce dispositif de détection 51 est par exemple formé par un système de détection par ondes électromagnétiques, un système de détection optique ou bien un système d'imagerie composé d'au moins une caméra. Ce dispositif de détection 51 est capable de détecter un objet 10,10' fixe ou mobile, situé dans l'environnement de l'aéronef 20 et également d'estimer des premiers états successifs de l'objet 10,10', à savoir sa position, sa vitesse et son accélération.

Dès lors, ce dispositif de détection 51 peut ainsi estimer si l'objet 10,10', grâce à ses premiers états successifs, se rapproche de l'aéronef 20 ou au contraire s'en éloigne.

Dans le cas représenté sur la figure 3, on constate qu'un premier objet 10 a une première trajectoire 16 se rapprochant de l'aéronef 20 et de la seconde trajectoire 26 de l'aéronef 20 alors qu'un second objet 10' a une première trajectoire 16' s'éloignant de l'aéronef 20 et de sa seconde trajectoire 26. Dès lors, le procédé d'évitement va ignorer dans les étapes suivantes ce second objet 10' qui ne présente aucun risque de collision avec l'aéronef 20 et se focaliser le premier objet 10 qui peut présenter un risque de collision avec l'aéronef 20.

Ensuite, une première estimation 102 des premiers états successifs de l'objet 10 est réalisée par l'intermédiaire du dispositif de détection 51. La position, la vitesse et l'accélération de l'objet 10 formant ces premiers états sont définies dans le repère local $(X_L, Y_L, Z_L)$ de l'aéronef 20, savoir relativement à l'aéronef 20. Ces premiers états successifs de l'objet 10 peuvent être temporairement stockés dans la mémoire 53.

Puis, une deuxième estimation 103 de seconds états successifs de l'aéronef 20 est réalisée par l'intermédiaire d'un dispositif de localisation 52. Comme pour l'objet 10, les seconds états de l'aéronef 20 sont formés par la position, la vitesse et l'accélération de l'aéronef 20. La position, la vitesse et l'accélération de l'aéronef 20 sont estimées dans le repère terrestre $(X_T, Y_T, Z_T)$. Ces seconds états successifs de l'aéronef 20 peuvent être stockés temporairement dans la mémoire 53. Le dispositif de localisation 52 est par exemple formé par au moins un récepteur GNSS, au moins une centrale inertielle, voire une combinaison de plusieurs de ces équipements afin d'en améliorer la précision et la fiabilité.

Suite à ces estimations 102,103 des premiers et seconds états successifs, une première caractérisation 104 d'une première trajectoire 16 de l'objet 10 est réalisée. Cette première trajectoire 16 de l'objet 10 est établie dans le repère terrestre $(X_T, Y_T, Z_T)$ par le calculateur 54 à partir des premiers états successifs de l'objet 10 et des seconds états successifs de l'aéronef 20 stockés dans la mémoire 53.

Parallèlement, une seconde caractérisation 105 d'une seconde trajectoire 26 de l'aéronef 20 est réalisée. Cette seconde trajectoire 26 de l'aéronef 20 est également établie dans le repère terrestre $(X_T, Y_T, Z_T)$ par le calculateur 54 à partir des seconds états successifs de l'aéronef 20 stockés dans la mémoire 53. Cette seconde caractérisation 105 d'une seconde trajectoire 26 de l'aéronef 20 peut également être réalisée de façon séquentielle, après la première caractérisation 104 d'une première trajectoire 16 de l'objet 10.

La première trajectoire 16 de l'objet 10 et la seconde trajectoire 26 de l'aéronef 20 sont caractérisées respectivement par un jeu de trois équations en fonction du temps donnant respectivement la position de l'objet 10 et celle de l'aéronef 20 dans le repère terrestre $(X_T, Y_T, Z_T)$.

Ces équations peuvent être simplifiées en prenant par exemple l'hypothèse que l'objet 10 et l'aéronef 20 ont une accélération constante. Ces équations sont alors du second ordre. On obtient ainsi pour la première trajectoire 16 de l'objet 10 :

$$\begin{cases} X_0 = \hat{X}_{0i} + \hat{V}_{x0i}\, t + \dfrac{1}{2}\, \hat{G}_{x0i}\, t^2, \\[2mm] Y_0 = \hat{Y}_{0i} + \hat{V}_{y0i}\, t + \dfrac{1}{2}\, \hat{G}_{y0i}\, t^2, \\[2mm] Z_0 = \hat{Z}_{0i} + \hat{V}_{z0i}\, t + \dfrac{1}{2}\, \hat{G}_{z0i}\, t^2. \end{cases}$$

avec

- *Xo, Yo, Zo,* les coordonnées de l'objet 10 dans le repère terrestre $(X_T, Y_T, Z_T)$, les coefficients de ces équations étant déterminés à partir des estimations des premiers états successifs de l'objet 10 et des seconds états successifs de l'aéronef 20,
- $\hat{X}_{0i}, \hat{Y}_{0i}, \hat{Z}_{0i}$ correspondant à des coordonnées initiales de l'objet 10 dans le repère terrestre $(X_T, Y_T, Z_T)$,
- $\hat{V}_{x0i}, \hat{V}_{y0i}, \hat{V}_{z0i}$, correspondant à des vitesses initiales de l'objet 10 selon les directions du repère terrestre $(X_T, Y_T, Z_T)$, et
- $\hat{G}_{x0i}, \hat{G}_{y0i}, \hat{G}_{z0i}$, étant les accélérations de l'objet 10 selon les directions du repère terrestre $(X_T, Y_T, Z_T)$.

De même, on obtient pour la seconde trajectoire 26 de l'aéronef 20 :

$$\begin{cases} X_H = X_{Hi} + V_{xHi}\, t + \dfrac{1}{2}\, G_{xHi}\, t^2, \\[2mm] Y_H = Y_{Hi} + V_{yHi}\, t + \dfrac{1}{2}\, G_{yHi}\, t^2, \\[2mm] Z_H = Z_{Hi} + V_{zHi}\, t + \dfrac{1}{2}\, G_{zHi}\, t^2. \end{cases}$$

avec

- $X_H, Y_H, Z_H,$ les coordonnées de l'aéronef 20 dans le repère terrestre $(X_T, Y_T, Z_T)$, les coefficients de ces équations étant déterminés à partir des estimations des seconds états successifs de l'aéronef 20,
- $X_{Hi}, Y_{Hi}, Z_{Hi}$ correspondant à des coordonnées initiales de l'aéronef 20 dans le repère terrestre $(X_T, Y_T, Z_T)$,
- $V_{xHi}, V_{yHi}, V_{zHi}$, correspondant à des vitesses initiales de l'aéronef selon les directions du repère terrestre $(X_T, Y_T, Z_T)$, et
- $G_{xHi}, G_{yHi}, G_{zHi}$, étant les accélérations de l'aéronef 20 selon les directions du repère terrestre $(X_T, Y_T, Z_T)$.

Une troisième estimation 106 d'une distance entre la première trajectoire 16 de l'objet 10 et la seconde trajectoire 26 de l'aéronef 20 est ensuite réalisée. Cette distance entre la première trajectoire 16 et la seconde trajectoire 26 est définie à partir des deux jeux de trois équations caractérisant les première et seconde trajectoires 16,26 par une fonction polynômiale du temps telle que :

$$D^2 = (X_0 + X_H)^2 + (Y_0 + Y_H)^2 + (Z_0 + Z_H)^2.$$

En considérant l'hypothèse d'une accélération constante de l'objet 10 et celle de l'aéronef 20, cette fonction polynômiale du temps est de degré quatre telle que :

$$D^2 = (X_0 + X_H)^2 + (Y_0 + Y_H)^2 + (Z_0 + Z_H)^2 = f(t^4, t^3, t^2, t).$$

Ces jeux d'équations ainsi que la fonction polynômiale du temps peuvent être stockés temporairement dans la mémoire 53

Une quatrième estimation 107 d'une distance minimale $d_m$ entre la première trajectoire 16 de l'objet 10 et la seconde trajectoire 26 de l'aéronef 20 est alors réalisée afin d'identifier un éventuelle risque de collision entre l'objet 10 et l'aéronef 20. Cette distance minimale $d_m$ correspond à une valeur de temps particulière annulant la dérivée par rapport au temps de la fonction polynômiale du temps définissant la distance entre la première trajectoire 16 et la seconde trajectoire 26.

Selon l'hypothèse d'accélération constante de l'objet 10 et de l'aéronef 20, cette dérivée par rapport au temps est une fonction polynômiale de degré trois. Dès lors, il peut exister une ou trois valeurs de temps particulières annulant cette dérivée formée par la fonction polynômiale de degré trois selon les caractéristiques de cette dérivée. Cependant, une seule valeur de temps particulière correspond généralement à une distance minimale $d_m$ entre les première et seconde trajectoires 16,26. Cette distance minimale $d_m$ est visible sur la figure 3.

Enfin, en fonction de cette distance minimale $d_m$, un déclenchement 108 d'une alarme peut être effectué pour signaler à l'équipage de l'aéronef 20 un risque de collision entre l'objet 10 et l'aéronef 20. Le déclenchement 108 d'une alarme est alors réalisé lorsque la distance minimale $d_m$ est inférieure à un premier seuil correspondant à un premier niveau de risque de collision entre l'objet 10 et l'aéronef 20.

Cette alarme est par exemple sonore et émise par le dispositif d'alerte 55, émettant des sons ou bien une annonce vocale. Cette alarme peut également être visuelle, affichant un message ou un symbole spécifique sur l'écran 56 de l'aéronef 20.

L'équipage de l'aéronef 20, et le pilote en particulier, sont ainsi informés de la situation de l'aéronef 20, à savoir le premier niveau de risque de collision et qu'une manœuvre d'évitement adaptée doit être réalisée.

En outre, ce procédé d'évitement peut comporter une, deux ou trois étapes optionnelles.

Par exemple, ce procédé d'évitement peut comporter une étape supplémentaire de réalisation 109 d'une manœuvre d'évitement par l'aéronef 20 de l'objet 10 dès que la distance minimale $d_m$ est inférieure à un second seuil. Le second seuil est inférieur au premier seuil et correspond à un deuxième niveau de risque de collision entre l'objet 10 et l'aéronef 20. En effet, la distance minimale $d_m$ est plus faible que précédemment et le risque de collision entre l'objet 10 et l'aéronef 20 est supérieur.

La manœuvre d'évitement est réalisée de préférence avec une accélération particulière de l'aéronef 20 permettant de maximiser la distance entre la première trajectoire 16 et la seconde trajectoire 26 correspondant à la valeur de temps particulière associée à la distance minimale $d_m$. Cependant, lorsque cette accélération particulière est supérieure à une accélération limite, la manœuvre d'évitement est réalisée avec cette accélération limite afin de préserver le confort de l'équipage et celui des passagers de l'aéronef 20.

La réalisation 109 de la manœuvre d'évitement de l'objet 10 par l'aéronef 20 est effectuée de façon automatique, généralement par le pilote automatique 24 de l'aéronef 20, des ordres d'évitement étant fournis par le calculateur 54 au pilote automatique 24. La réalisation 109 de cette manœuvre d'évitement est effectuée parallèlement au déclenchement 108 d'une alarme.

Ce procédé d'évitement peut aussi comporter une étape d'inhibition 110 du déclenchement 108 d'une l'alarme et de la réalisation 109 d'une manœuvre d'évitement. Cette étape d'inhibition 110 évite le déclenchement 108 d'une l'alarme et la réalisation 109 d'une manœuvre d'évitement lorsque l'objet 10 détecté est éloigné de l'aéronef 20. En effet, un objet 10 détecté peut présenter initialement une première trajectoire se rapprochant de la seconde trajectoire de l'aéronef 20, caractérisant un risque de collision. Puis la première trajectoire de l'objet 10 peut évoluer pour s'écarter de la seconde trajectoire de l'aéronef 20, le risque de collision préalablement déterminé n'ayant plus lieu d'être. L'étape d'inhibition 110 est par exemple activé lorsque la distance courante entre l'objet 10 et l'aéronef 20 est supérieure à un seuil de distance.

Ce procédé d'évitement peut également comporter une étape complémentaire d'affichage 111 de l'objet 10 sur l'écran 56, qui peut être réalisée parallèlement aux autres étapes de ce procédé. De la sorte, le pilote de l'aéronef 20 peut suivre l'évolution de l'objet 10 vis-à-vis de l'aéronef 20 et son rapprochement par rapport à l'aéronef 20. Cet affichage peut également représenter la première trajectoire 16 de l'objet 10 et la seconde trajectoire 26 de l'aéronef 20 telles que représentées par exemple sur la figure 3.

Naturellement, la présente invention, qui est définie par les revendications ci-après, est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé d'évitement d'un objet (10) par détection de son rapprochement d'un aéronef (20) à voilure tournante, ledit aéronef (20) comportant un calculateur (54), un pilote automatique (24), un dispositif de détection (51) et un dispositif de localisation (52), ledit procédé comportant les étapes suivantes :

- une détection (101) d'un objet (10) se rapprochant dudit aéronef (20), ledit objet (10) étant détecté par ledit dispositif de détection (51),
- une première estimation (102) de premiers états successifs dudit objet (10), lesdits premiers états successifs dudit objet (10) étant estimés par ledit dispositif de détection (51), lesdits premiers états étant constitués par une position, une vitesse et une accélération dudit objet (10),
- une deuxième estimation (103) de seconds états successifs dudit aéronef (20), lesdits seconds états successifs dudit aéronef (20) étant estimés par ledit dispositif de localisation (52), lesdits seconds états étant constitués par une position, une vitesse et une accélération dudit aéronef (20),
- une première caractérisation (104) par un jeu d'équations en fonction du temps d'une première trajectoire (16) dudit objet (10), en fonction desdits premiers et seconds états successifs,
- une seconde caractérisation (105) par un jeu d'équations en fonction du temps d'une seconde trajectoire (26) dudit aéronef (20), en fonction desdits seconds états successifs,
- une troisième estimation (106) d'une distance en fonction du temps entre ladite première trajectoire (16) dudit objet (10) et ladite seconde trajectoire (26) dudit aéronef (20) estimée par une fonction polynômiale définie à partir desdits deux jeux d'équations,
- une quatrième estimation (107) d'une distance minimale ($d_m$) entre ladite première trajectoire (16) dudit objet (10) et ladite seconde trajectoire (26) dudit aéronef (20) par dérivation par rapport au temps de ladite fonction polynomiale et par recherche d'une valeur de temps particulière qui minimise ladite distance,
- un déclenchement (108) d'une alarme lorsque ladite distance minimale ($d_m$) est inférieure à un premier seuil, et
- une réalisation (109) d'une manœuvre d'évitement dudit objet (10) par ledit aéronef (20) dès que ladite distance minimale ($d_m$) est inférieure à un second seuil, ledit second seuil étant inférieur audit premier seuil, ladite manœuvre d'évitement étant réalisée avec une accélération particulière dudit aéronef (20) permettant de maximiser ladite distance entre ladite première trajectoire (16) dudit objet (10) et ladite seconde trajectoire (26) dudit aéronef (20) correspondant à ladite valeur de temps particulière associée à ladite distance minimale ($d_m$),

**caractérisé en ce que**

- ladite accélération particulière est déterminée en fonction de ladite distance minimale ($d_m$) et de ladite valeur de temps particulière par le calcul d'un vecteur accélération dudit aéronef (20) maximisant ladite distance minimale à ladite valeur de temps particulière,
- ledit vecteur accélération est caractérisé dans un repère de navigation (N,E,D) par :

   • $\gamma$ une valeur de ladite accélération particulière,
   • $\beta$ étant un angle entre un axe N d'un repère de navigation *(N,E,D),* et une projection sur un plan (N,E) ledit vecteur accélération,
   • $\alpha$ étant un angle entre ledit plan (N,E) et ledit vecteur accélération,

ladite manœuvre d'évitement est réalisée par l'intermédiaire dudit pilote automatique (24), des ordres d'évitement étant fournis audit pilote automatique (24) :

- par une action en roulis dudit aéronef (20) en agissant sur ledit angle d'assiette (<p) autour de l'axe de roulis dudit aéronef (20) afin d'obtenir :

$$\varphi = \tan^{-1}\left[\frac{\gamma}{G}\sin(\beta - \psi)\cos\alpha\right],$$

G étant l'accélération de la pesanteur terrestre, et
$\psi$ étant un cap dudit aéronef (20), puis
- en coordonnant ladite action en roulis avec une variation $\dot{\psi}$ du cap dudit aéronef (20) de sorte que

$$\frac{G}{U}\tan\varphi = \dot{\psi},$$

U étant avec une vitesse longitudinale dudit aéronef (20), et
- en coordonnant ladite action en roulis avec une action sur le pas collectif dudit aéronef (20) de sorte que

$$j_Z = -\frac{\cos\theta + \delta_{vert}}{\cos\varphi} \approx -\frac{1}{\cos\varphi},$$

$\theta$ étant un angle d'assiette autour d'un axe de tangage dudit aéronef (20),
$J_z$ étant un facteur de charge dudit aéronef (20) selon une direction verticale z d'un repère local (x,y,z) dudit aéronef (20), et
$\delta_{vert}$ étant un minimum d'accélération verticale normalisée en fonction de ladite accélération de la pesanteur terrestre G.

2. Procédé selon la revendication 1,
**caractérisé en ce que** ladite première trajectoire (16) dudit objet (10) et ladite seconde trajectoire (26) dudit aéronef (20) sont caractérisées respectivement par un jeu de trois équations en fonction du temps.

3. Procédé selon la revendication 2,
**caractérisé en ce que**, ledit objet (10) et ledit aéronef (20) étant considérés avoir une accélération constante, ladite première trajectoire (16) dudit objet (10) et ladite seconde trajectoire (26) dudit aéronef (20) sont caractérisées respectivement par un jeu de trois équations du second ordre de sorte que ladite distance entre ladite première trajectoire (16) dudit objet (10) et ladite seconde trajectoire (26) dudit aéronef (20) est **caractérisée par** une fonction polynômiale de degré quatre.

4. Procédé selon l'une quelconque des revendications 1 à 3, **caractérisé en ce que** ledit dispositif de détection (51) est formé par un système de détection par ondes électromagnétiques, un système de détection optique, un système d'imagerie composé d'au moins une caméra ou bien un système d'imagerie composé d'au moins une caméra combiné avec un système de détection par ondes électromagnétique ou bien un système de détection optique.

5. Procédé selon l'une quelconque des revendications 1 à 4, **caractérisé en ce que** ledit dispositif de localisation (52) est formé par au moins un récepteur GNSS et/ou au moins une centrale inertielle.

6. Procédé selon l'une quelconque des revendications 1 à 5, **caractérisé en ce que** ledit procédé comporte une étape complémentaire d'affichage (111) dudit objet (10) sur un dispositif d'affichage (56).

7. Procédé selon l'une quelconque des revendications 1 à 6, **caractérisé en ce que** ledit vecteur accélération dudit aéronef (20) s'écrit dans un second repère (x,Y,W) attaché audit aéronef (20) :

$$\begin{pmatrix} a_x \\ a_Y \\ a_W \end{pmatrix} = \gamma \begin{pmatrix} \cos(\beta - \psi)\cos\alpha\cos\theta + \sin\alpha\sin\theta \\ \sin(\beta - \psi)\cos\alpha \\ \cos(\beta - \psi)\cos\alpha\sin\theta - \sin\alpha\cos\theta \end{pmatrix},$$

$a_X$, $a_Y$, $a_W$ étant les coordonnées dudit vecteur accélération dans ledit second repère (x,Y,W),
ledit second repère (x,Y,W) est défini par un axe x aligné sur une direction longitudinale dudit aéronef (20) et pointant vers l'avant dudit aéronef (20), un axe Y situé dans un plan horizontal parallèle audit plan (N,E) et pointant vers la droite dudit aéronef (20) et un axe W défini de sorte que le trièdre (x,Y,W) forme un repère direct.

8. Procédé selon l'une quelconque des revendications 1 à 7, **caractérisé en ce que** ladite manœuvre d'évitement est réalisée en agissant sur les assiettes ($\varphi$ et $\theta$) et le facteur de charge $j_z$ dudit aéronef (20) ainsi que sur une variation $\dot{\psi}$ du cap dudit aéronef (20) induite par des prises de roulis dudit aéronef (20).

9. Procédé selon l'une quelconque des revendications 1 à 8, **caractérisé en ce que** ladite accélération particulière dudit aéronef (20) est estimée par dérivation de ladite distance minimale (dm) par rapport à chacune des composantes du vecteur accélération dudit aéronef (20).

10. Procédé selon l'une quelconque des revendications 1 à 9, **caractérisé en ce que** lorsque ladite accélération particulière est supérieure à une accélération limite, ladite manœuvre d'évitement est réalisée avec ladite accélération limite.

11. Dispositif (50) d'évitement d'un objet (10) par détection de son rapprochement destiné à équiper un aéronef (20) à voilure tournante, ledit dispositif (50) comportant :

  - un dispositif de détection (51) dudit objet (10) fournissant un premier état dudit objet (10),
  - un dispositif de localisation (52) dudit aéronef (20) fournissant un second état dudit aéronef (20),
  - au moins une mémoire (53) stockant des instructions de calcul, des premiers états successifs dudit objet (10) et des seconds états successifs dudit aéronef (20),
  - au moins un calculateur (54) apte à exécuter lesdites instructions de calcul,
  - au moins un dispositif d'alerte (55) relié audit calculateur (54), et
  - un pilote automatique (24), **caractérisé en ce que** ledit dispositif (50) est adapté à mettre en œuvre le procédé selon l'une des revendications 1 à 10.

12. Aéronef (20) à voilure tournante,
  **caractérisé en ce que** ledit aéronef (20) comporte un dispositif (50) d'évitement d'un objet (10) par détection de son rapprochement selon la revendication 11.

**Patentansprüche**

1. Verfahren zum Ausweichen vor einem Objekt (10), indem seine Annäherung an ein Drehflügelflugzeug (20) erfasst wird, wobei das Flugzeug (20) einen Rechner (54), einen Autopiloten (24), eine Erfassungsvorrichtung (51) und eine Ortungsvorrichtung (52) umfasst, wobei das Verfahren die folgenden Schritte umfasst:

  - Erfassen (101) eines Objekts (10), das sich dem Flugzeug (20) nähert, wobei das Objekt (10) von der Erfassungsvorrichtung (51) erfasst wird,
  - erstes Abschätzen (102) von aufeinanderfolgenden ersten Zuständen des Objekts (10), wobei die aufeinanderfolgenden ersten Zustände des Objekts (10) durch die Erfassungsvorrichtung (51) abgeschätzt werden, wobei die ersten Zustände durch eine Position, eine Geschwindigkeit und eine Beschleunigung des Objekts (10) gebildet werden,
  - zweites Abschätzen (103) von aufeinanderfolgenden zweiten Zuständen des Flugzeugs (20), wobei die aufeinanderfolgenden zweiten Zustände des Flugzeugs (20) durch die Ortungsvorrichtung (52) geschätzt werden, wobei die zweiten Zustände durch eine Position, eine Geschwindigkeit und eine Beschleunigung des Flugzeugs (20) gebildet werden,
  - erstes Charakterisieren (104) einer ersten Trajektorie (16) des Objekts (10) durch einen Satz von Gleichungen in Abhängigkeit von der Zeit, in Abhängigkeit von den ersten und zweiten aufeinanderfolgenden Zuständen,
  - zweites Charakterisieren (105) einer zweiten Trajektorie (26) des Flugzeugs (20) durch einen Satz von Gleichungen als Funktion der Zeit in Abhängigkeit von den aufeinanderfolgenden zweiten Zuständen,
  - drittes Abschätzen (106) eines zeitabhängigen Abstands zwischen der ersten Trajektorie (16) des Objekts (10) und der zweiten Trajektorie (26) des Flugzeugs (20), das durch eine Polynomfunktion abgeschätzt wird, die aus den beiden Gleichungsreihen definiert ist,
  - viertes Abschätzen (107) eines Mindestabstands ($d_m$) zwischen der ersten Trajektorie (16) des Objekts (10) und der zweiten Trajektorie (26) des Flugzeugs (20) durch Ableiten der Polynomfunktion nach der Zeit und durch Suchen nach einem bestimmten Zeitwert, der den Abstand minimiert,
  - Auslösen (108) eines Alarms, wenn der Mindestabstand ($d_m$) kleiner als ein erster Schwellenwert ist, und
  - Durchführen (109) eines Ausweichmanövers des Flugzeugs (20) vor dem Objekt (10), sobald der Mindestabstand ($d_m$) kleiner als ein zweiter Schwellenwert ist, wobei der zweite Schwellenwert unter dem ersten Schwellenwert liegt, wobei das Ausweichmanöver mit einer bestimmten Beschleunigung des Luftfahrzeugs (20) durchgeführt wird, die es ermöglicht, den Abstand zwischen der ersten Trajektorie (16) des Objekts (10) und der zweiten Trajektorie (26) des Flugzeugs (20), der dem mit dem Mindestabstand ($d_m$) verknüpften bestimmten Zeitwert entspricht, zu maximieren,

  **dadurch gekennzeichnet, dass**

  - die bestimmte Beschleunigung als eine Funktion des Mindestabstands ($d_m$) und des besonderen Zeitwerts bestimmt wird, indem ein Beschleunigungsvektor des Flugzeugs (20) berechnet wird, der den Mindestabstand bei dem besonderen Zeitwert maximiert, und
  - der Beschleunigungsvektor in einem Navigationsrahmen (N, E, D) **gekennzeichnet ist durch** :

- einen bestimmten Wert g der Beschleunigung,
- einen Winkel β zwischen einer N-Achse eines Navigationsbezugssystems (N,E,D) und einer Projektion des Beschleunigungsvektors auf eine (N,E)-Ebene,
- einen Winkel α zwischen der (N,E)-Ebene und dem Beschleunigungsvektor ist,

wobei das Ausweichmanöver über den Autopiloten (24) durchgeführt wird, wobei Ausweichbefehle an den Autopiloten (24) gegeben werden:

- **durch** eine Rollbewegung des Flugzeugs (20), indem auf den Lagewinkel (φ) um die Rollachse des Flugzeugs (20) eingewirkt wird, um :

$$\varphi = \tan^{-1}\left[\frac{\gamma}{G}\sin(\beta - \psi)\cos\alpha\right]$$

zu erhalten, wobei G die Erdbeschleunigung ist, und
ψ ein Kurs des Luftfahrzeugs (20) ist, dann
- **durch** Koordinieren der Rollbewegung mit einer Kursänderung $\dot{\Psi}$ des Flugzeugs (20), so dass

$$\frac{G}{U}\tan\varphi = \dot{\psi},$$

wobei U mit der Längsgeschwindigkeit des Flugzeugs (20) übereinstimmt, und
- **durch** Koordinieren der Rollbewegung mit einer Einwirkung auf die kollektive Neigung des Flugzeugs (20), so dass

$$j_z = -\frac{\cos\theta + \delta_{vert}}{\cos\varphi} \approx -\frac{1}{\cos\varphi},$$

wobei θ ein Lagewinkel um eine Nickachse des Flugzeugs (20) ist, $J_z$ ein Lastfaktor des Flugzeugs (20) in einer vertikalen Richtung z eines lokalen Bezugssystems (x, y, z) des Flugzeugs (20) ist, und
$\delta_{vert}$ ein Minimum der mit der Erdbeschleunigung G normierten Vertikalbeschleunigung ist.

2. Verfahren nach Anspruch 1,
**dadurch gekennzeichnet, dass** die erste Trajektorie (16) des Objekts (10) und die zweite Trajektorie (26) des Flugzeugs (20) jeweils durch einen Satz von drei Gleichungen in Abhängigkeit von der Zeit gekennzeichnet sind.

3. Verfahren nach Anspruch 2,
**dadurch gekennzeichnet, dass** bei Annahme einer jeweils konstanten Beschleunigung des Objekts (10) und des Flugzeugs (20) die erste Trajektorie (16) des Objekts (10) und die zweite Trajektorie (26) des Luftfahrzeugs (20) jeweils durch eine Gruppe von drei Gleichungen zweiter Ordnung derart gekennzeichnet sind, dass der Abstand zwischen der ersten Trajektorie (16) des Objekts (10) und der zweiten Trajektorie (26) des Luftfahrzeugs (20) durch eine Polynomfunktion vierten Grades gekennzeichnet ist.

4. Verfahren nach einem der Ansprüche 1 bis 3,
**dadurch gekennzeichnet, dass** die Erfassungsvorrichtung (51) durch ein Erfassungssystem mittels elektromagnetischer Wellen, ein optisches Erfassungssystem, ein aus mindestens einer Kamera bestehendes Abbildungssystem oder ein aus mindestens einer Kamera in Kombination mit einem Erfassungssystem mittels elektromagnetischer Wellen oder einem optischen Erfassungssystem bestehendes Abbildungssystem gebildet ist.

5. Verfahren nach einem der Ansprüche 1 bis 4,
**dadurch gekennzeichnet, dass** die Ortungsvorrichtung (52) durch mindestens einen GNSS-Empfänger und/oder mindestens eine Inertialeinheit gebildet wird.

6. Verfahren nach einem der Ansprüche 1 bis 5,
**dadurch gekennzeichnet, dass** das Verfahren einen ergänzenden Schritt des Anzeigens (111) des Objekts (10) auf einer Anzeigevorrichtung (56) umfasst.

7. Verfahren nach einem der Ansprüche 1 bis 6, **dadurch gekennzeichnet, dass** der Beschleunigungsvektor des Luftfahrzeugs (20) in einem zweiten, am Flugzeug (20) festen Bezugssystem (x, Y, W) geschrieben wird:

$$\begin{pmatrix} a_x \\ a_Y \\ a_W \end{pmatrix} = \gamma \begin{pmatrix} \cos(\beta - \psi)\cos\alpha\cos\theta + \sin\alpha\sin\theta \\ \sin(\beta - \psi)\cos\alpha \\ \cos(\beta - \psi)\cos\alpha\sin\theta - \sin\alpha\cos\theta \end{pmatrix},$$

wobei $a_x$, ay, $a_w$ die Koordinaten des Beschleunigungsvektors in dem zweiten Bezugssystem (x,Y,W) sind, das zweite Bezugssystem (x, Y, W) definiert ist durch eine x-Achse, die in einer Längsrichtung des Flugzeugs (20) ausgerichtet ist und vom Flugzeug (20 aus nach vorn zeigt, eine Y-Achse, die in einer horizontalen Ebene parallel zur Ebene (N, E) liegt und vom Flugzeug (20) aus nach rechts zeigt, und eine W-Achse, die so definiert ist, dass das Dreibein (x, Y, W) ein rechtshändiges Koordinatensystem bildet.

8. Verfahren nach einem der Ansprüche 1 bis 7, **dadurch gekennzeichnet, dass** das Ausweichmanöver durchgeführt wird durch Einwirken auf die Fluglagen ($\varphi$ und $\theta$) und den Lastfaktor $j_z$ des Flugzeugs (20) sowie auf eine durch Roll-Eingaben des Flugzeugs (20) induzierte Änderung $\dot{\Psi}$ des Kurses des Flugzeugs (20).

9. Verfahren nach einem der Ansprüche 1 bis 8, **dadurch gekennzeichnet, dass** die bestimmte Beschleunigung des Flugzeugs (20) geschätzt wird, indem der Mindestabstand (dm) gegen jede Komponente des Beschleunigungsvektors des Flugzeugs (20) abgeleitet wird.

10. Verfahren nach einem der Ansprüche 1 bis 9, **dadurch gekennzeichnet, dass** wenn die bestimmte Beschleunigung größer als eine Grenzbeschleunigung ist, das Ausweichmanöver mit dieser Grenzbeschleunigung durchgeführt wird.

11. Vorrichtung (50) zum Ausweichen vor einem Objekt (10) durch Erfassen seiner Annäherung, die zur Ausrüstung eines Drehflügelflugzeugs (20) bestimmt ist, wobei die Vorrichtung (50) umfasst:

- eine Erfassungsvorrichtung (51) zum Erfassen des Objekts (10), die einen ersten Zustand des Objekts (10) liefert,
- eine Ortungsvorrichtung (52) zur Ortung des Flugzeugs (20), die einen zweiten Zustand des Flugzeugs (20) liefert,
- mindestens einen Speicher (53), der Berechnungsanweisungen, aufeinanderfolgende erste Zustände des Objekts (10) und aufeinanderfolgende zweite Zustände des Flugzeugs (20) speichert,
- mindestens einen Rechner (54), der in der Lage ist, die Berechnungsanweisungen auszuführen,
- mindestens eine Warnvorrichtung (55), die mit dem Rechner (54) verbunden ist, und
- einen Autopiloten (24),

**dadurch gekennzeichnet, dass** die Vorrichtung (50) zur Durchführung des Verfahrens nach einem der Ansprüche 1 bis 10 eingerichtet ist.

12. Drehflügelflugzeug (20), **dadurch gekennzeichnet, dass** das Flugzeug (20) eine Vorrichtung (50) zum Ausweichen vor einem Objekt (10) durch Erfassen seiner Annäherung gemäß Anspruch 11 umfasst.

## Claims

1. Method for avoiding an object (10) by detecting its approach to a rotary-wing aircraft (20), said aircraft (20) having a calculator (54), an automatic pilot (24), a detection device (51) and a positioning device (52), said method consisting of the following stages:

- a detection (101) of an object (10) approaching said aircraft (20), said object (10) being detected by means of the detection device (51),
- a first estimate (102) of the first successive states of said object (10), said first successive states of said object (10) being estimated by said detection device (51), said first states constituting a position, a speed and an acceleration of said object (10),
- a second estimate (103) of the second successive states of said aircraft (20), said second successive states of said aircraft (20) being estimated by said detection device (52), said second states constituting a position, a speed and an acceleration of said aircraft (20),
- a first characterisation (104) by means of a set of equations as a function of time of a first trajectory (16) of said object (10) as a function of said first and second successive states,
- a second characterisation (105) by means of a set of equations as a function of time of a second trajectory (26) of said aircraft (20) as a function of said second successive states,
- a third estimate (106) of a distance as a function of the time between said first trajectory (16) of said object (10) and said second trajectory (26) of said aircraft (20) estimated by means of a polynomial function defined from said two sets of equations,
- a fourth estimate (107) of a minimum distance ($d_m$) between said first trajectory (16) of said object (10) and said second trajectory (26) of said aircraft (20) derived with respect to the time of said polynomial function and by researching a particular time value which minimises said distance,
- a triggering (108) of an alarm if said minimum distance ($d_m$) is less than a first threshold and
- an implementation (109) of an avoidance manoeuvre to avoid said object (10) by said aircraft (20) as soon as said minimum distance ($d_m$) is less than a second threshold, said second threshold being less than said first threshold, said avoidance manoeuvre being carried out with a particular acceleration of said aircraft (20) enabling the maximisation of said distance between said first trajectory (16) of said object (10) and said second trajectory (26) of said aircraft (20) corresponding to said particular time value associated with said minimum distance ($d_m$),

**characterised in that**

- said particular acceleration is determined as a function of said minimum distance ($d_m$) and of said particular time value by means of the calculation of an acceleration vector of said aircraft (20), maximising said minimum distance at said particular time value,
- said acceleration vector being **characterised in** a navigation reference frame (N,E,D) by

  • $\gamma$ a value of said particular acceleration,
  • $\beta$ being an angle between an axis N of said navigation reference frame *(N,E,D)* and a projection on a plane (N,E) of said acceleration vector,
  • $\alpha$ being an angle between said plane (N,E) and said acceleration vector,

said avoidance manoeuvre is carried out by means of said automatic pilot (24), with the avoidance orders being provided to said automatic pilot (24):
- by means of a rolling action of said aircraft (20) acting on said attitude angle *($\varphi$)* about the rolling axis of said aircraft (20) in order to obtain:

$$\varphi = \tan^{-1}\left[\frac{\gamma}{G}\sin(\beta - \psi)\cos\alpha\right]$$

$G$ being the acceleration of gravity and $\psi$ being a heading of said aircraft (20), so
- - by coordinating said rolling action with a variation $\dot{\psi}$ of the heading of said aircraft (20) such that

$$\frac{G}{U}\tan\varphi = \dot{\psi}$$

U being a longitudinal speed of said aircraft (20), and
- coordinating said rolling action with an action on the collective pitch of said aircraft (20) such that

$$j_z = -\frac{\cos\theta + \delta_{vert}}{\cos\varphi} \approx -\frac{1}{\cos\varphi}$$

$\theta$ being an attitude angle from a pitching axis of said aircraft (20),
$J_z$ being a load factor of said aircraft (20) according to a vertical direction z of a local reference frame (x,y,z) of said aircraft (20) and
$\delta_{vert}$ being a minimum normalised vertical acceleration as a function of said gravitational acceleration, G.

2. Method according to Claim 1,
   **characterised in that** said first trajectory (16) of said object (10) and said second trajectory (26) of said aircraft (20) are respectively **characterised by** a set of three equations as a function of time.

3. Method according to Claim 2,
   **characterised in that** said object (10) and said aircraft (20) are considered to have a constant acceleration, said first trajectory (16) of said object (10) and said second trajectory (26) of said aircraft (20) are respectively **characterised by** a sect of three equations of the second order such that said distance between said first trajectory (16) of said object (10) and said second trajectory (26) of said aircraft (20) is **characterised by** a polynomial function of degree four.

4. Method according to any one of Claims 1 to 3,
   **characterised in that** said detection device (51) is formed by means of an electromagnetic wave detection system, an optical detection system, an imaging system comprising at least one camera or an imaging system comprised of at least one camera combined with an electromagnetic wave detection system or an optical detection system.

5. Method according to any one of Claims 1 to 4,
   **characterised in that** said positioning device (52) is formed by at least one GNSS receiver and/or at least one inertial unit.

6. Method according to any one of Claims 1 to 5,
   **characterised in that** said method comprises an additional display stage (111) of said object (10) on a display device (56).

7. Method according to any one of Claims 1 to 6,
   **characterised in that** said acceleration vector of said aircraft (20) is written in a second reference frame (x,Y,W) attached to said aircraft (20):

$$\begin{pmatrix} a_x \\ a_Y \\ a_W \end{pmatrix} = \gamma \begin{pmatrix} \cos(\beta - \psi)\cos\alpha\cos\theta + \sin\alpha\sin\theta \\ \sin(\beta - \psi)\cos\alpha \\ \cos(\beta - \psi)\cos\alpha\sin\theta - \sin\alpha\cos\theta \end{pmatrix}$$

$a_x$, $a_y$, $a_w$ being the coordinates of said acceleration vector in said second reference frame (x,Y,W),
said second reference frame (x,Y,W) being defined by an axis x aligned in a longitudinal direction of said aircraft (20) and pointing towards the front of said aircraft (20), and axis Y situated in a horizontal plane parallel to said plane (N,E) and pointing towards the right of said aircraft (20) and an axis W defined such that the trihedron (x,Y,W) forms a right-handed reference frame.

8. Method according to any one of Claims 1 to 7,
   **characterised in that** said avoidance manoeuvre is carried out acting on the attitude angles ($\varphi$ and $\theta$) and the load factor $J_z$ of said aircraft (20) and on a variation $\dot{\psi}$ of the heading of said aircraft (20) induced by the rolling of said aircraft (20).

9. Method according to any one of Claims 1 to 8,
   **characterised in that** said particular acceleration of said aircraft (20) is estimated by differentiating said minimum distance (dm) with respect to each of the components of the acceleration vector of said aircraft (20).

10. Method according to any one of Claims 1 to 9,

**characterised in that** when said particular acceleration is greater than an limited acceleration, said avoidance manoeuvre is carried out with said limited acceleration.

11. Device (50) to avoid an object (10) by detecting its approach, , the device being for fitting to a rotary-wing aircraft (20), said device (50) consisting of:

   - a detection device (51) of said object (10) providing a first state of said object (10),
   - a positioning device (52) of said aircraft (20) providing a second state of said aircraft (20),
   - at least one memory (53) storing the calculation instructions, the first successive states of said object (10) and the second successive states of said aircraft (20),
   - at least one calculator (54) able to execute said calculation instructions,
   - at least one alarm device (55) linked to said calculator (54), and
   - an automatic pilot (24),

   **characterised in that** said device (50) is adapted to implement the method according to any one of Claims 1 to 10.

12. Rotary-wing aircraft (20),
   **characterised in that** said aircraft (20) comprises a device (50) for avoiding an object (10) by detecting its approach according to Claim 11.

# Fig.1

# Fig.2

# Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016189112 A
- EP 2200006 A
- US 8965679 B
- US 7706979 B
- US 20120209457 A
- WO 2016029253 A
- WO 2016053196 A
- US 20020133294 A
- FR 2830630